# EUROPEAN PATENT APPLICATION

(11) **EP 2 075 750 A1**
(43) Date of publication of application: **01.07.2009**
(21) Application number: 07807347.5
(22) Date of filing: 14.09.2007
(51) Int. Cl.: G06Q 20/00

(54) **DATA TRANSMITTING/RECEIVING METHOD**

(30) Priority: 15.09.2006 JP 2006251932
(71) Applicant: Aplico System CO., LTD., Tokyo 144-0051 (JP)
(72) Inventor: HAYASHI, Kazutaka, Tokyo 144-0051 (JP)
(74) Representative: Bohmann, Armin K.
(86) International application number: PCT/JP2007/067943
(87) International publication number: WO 2008/032821

(57) **Abstract**

Provided is a data transmitting/receiving method as follows. A server device receives management data which includes matching information for making a judgment of validity and which is transmitted from a terminal. The server device judges whether or not the matching information included in the received management data is valid. If the result of the judgment is that the matching information is valid, the server device invalidates the matching information, prepares new valid matching information, and transmits replaced management data acquired by replacing the invalidated matching information included in the management data with the prepared new valid matching information to the terminal or a terminal different from the terminal.

## Description

### TECHNICAL FIELD

The present invention is related to a method and a system for realizing a transfer of a type of a security by transferring an electronic value file (or the data stored in the file) which includes data in which the value of types of securities are stored, or data in which information which is correlated with types of securities is stored.

### BACKGROUND ART

There are many securities which include information representing a value in a pattern of an array of electromagnetic bits. A case in point is a telephone card which is a card in which the number of times a call can be made is stored as magnetic data. Presently, in the EDY (registered trademark) system and in the SUICA (registered trademark) system, which are mainstream systems for electronic money, an array of electromagnetic bits represents information representing a value.

Securities which include information in an array of bits are categorized into an online type ID management and an offline type ID management. The online type ID management of securities is effective against double usage of a value. In order for a user to transfer a security in the meaning stated above, the user is made to connect to a center where the value of a security is managed for each user ID and because the recipient of the value is limited to a user having an ID, fraudulent use is rarely permitted. Alternatively, although a telephone card, the type of which is classified as the offline type of management, is used offline and therefore no center management is necessary, a telephone card is easily copied and forged. Significant losses have occurred through cards storing values as magnetic data, such as the Packy cards (registered trademark) used in pachinko stores in the gaming industry and the highway cards for paying express way tolls, which are typical examples. No management of ID is performed for these cards, and because each card owner manages the remaining balance they are a dispersed type management of balance. In other words, the computerization of value represented by telephone cards for example, are a combination of an offline type management and a dispersed type management of balance.

Because significant losses were made in the past with the offline types of management, in order to prevent fraudulent use, the online types of management of current electromagnetic securities are mainly used. However, in the current online types of management, the payment recipient and the balance for each payment recipient is managed by a center. In other words, these types of management are combinations of an online ID management and a center balance management (hereinafter referred to as a center ID balance management, for short). Therefore, the recipient of information transfer must be registered with the center. Consequently, the system becomes complex and management costs are incurred.
[Non patent document 1] Peter Wayne, "Digital Cash Technology," SoftBank Creative, 1997, ISBN4797303603.

### DISCLOSURE OF THE INVENTION

### PROBLEMS TO BE SOLVED

The present invention solves the aforementioned problems. Simply explained, the computerization of value in which it is difficult for fraudulent use to occur while using a dispersed type of balance management is proposed. That is, a method and a system is proposed in which a computerized value can be transferred without the need to register the recipient in advance and which also can be reused after the reception.

As stated above, if an electromagnetic security is not used under an online type ID management system, there is a high possibility of fraudulent use. Thus, in the present invention, a method and a system are proposed in which the value of a security is handled in a security electronic file in which the electronic file itself includes the value under a dispersed type balance management system in which an owner manages their balance without management of the balance by a center and while using an online type of ID.

### MEANS FOR SOLVING THE PROBLEMS

According to the present invention, a data transmitting and receiving method is proposed in which a server device receives management data which includes matching data for making a judgment of validity and which is transmitted from a terminal, the server device judges whether or not the matching data included in the received management data is valid, in the case that the result of the judgment is that the matching data is valid the server device invalidates the matching data, prepares new valid matching data, and transmits replaced management data acquired by replacing the invalidated matching data included in the management data with the prepared new valid matching data to the terminal or a terminal different from the terminal.

In addition, according to the present invention, a data transmitting and receiving system is proposed, the system being arranged with a server which includes a communication interface for communicating with a terminal, a receiving part which receives, by using the communication interface, management data which includes matching data for making a judgment of validity and which is transmitted from the terminal, a judgment part which judges whether or not the matching data included in the received data is valid, an invalidation part which invalidates the matching data in the case where the matching data is judged to be valid, a matching data preparation part which prepares new valid matching data, a replacement part which generates replaced management data acquired by replacing the invalidated matching data with the prepared new valid matching data, and a transmission part which transmits the replaced management data to the terminal or a terminal different from the terminal using the communication interface.

### EFFECT OF THE INVENTION

According to the present invention, it is possible to computerize a value which can be under dispersed management without managing the movement of the value in a center while using a dispersed type of balance management. In other words, it is possible to receive an electronic file which represents a value by various electromagnetic media by a terminal such as a PC, registration of the recipient in the center server is not necessary and it becomes possible to computerize a value in which it is actually difficult to forge the electronic file.

By transferring an electronic file by an electric communication means it is easy to transfer a type of a security. The recipient can also safely confirm receipt by rewriting matching data of the electronic file by the server and can also be further transferred to a different person. It is also easy to create a copy to prepare against theft or loss. Even in the case of theft (skimming) or loss, it is discovered early, and it is possible to retrieve the type of the security. In the extreme case that a type of a security is lost, it is limited only to the type of the security written in the value of a type of a security of an electronic value file.

The largest difference between the present invention and conventional technology is that matching data is rewritten with the transfer of a value in the present invention. In the conventional technology, it is possible to move a value by transferring a user's ID itself, and the user's ID is unchangeable, which is different in the present invention. In the present invention, because it is possible to move a value by transferring an electronic file (also called management data), the system becomes simpler and management costs are smaller. In addition, because anyone can receive the management data it is not necessary to register a store, which makes the participation to a system of an embodiment of the present invention easy. Also, because the matching data is rewritten, even if the management data is skimmed, the skimmer must use the management data immediately because it is possible to realize a system in which theft is difficult and the owner of the management data can easily notice the skimming.

### BRIEF DESCRIPTION OF THE DRAWINGS

Fig. 1 is a structural diagram of a server.
Fig. 2 is a diagram which shows an entire embodiment and the flow of an electronic value file.
Fig. 3 is a structural diagram of a terminal device.
Fig. 4 is a diagram which explains a method for receiving an electronic file by a specified recipient via a server.
Fig. 5 is a diagram which explains a method for confirming a match of a received electronic file.
Fig. 6 is a diagram which explains a method for dividing a value of an electronic value file and receiving the file by a recipient.
Fig. 7 is a diagram which explains a method for dividing a value of an electronic value file.
Fig. 8 is a diagram which explains a method for combining a value of an electronic value file.
Fig. 9 is a diagram which explains a method for exchanging an electronic value file with a security.
Fig. 10 is a diagram which explains a method for moving a value between electronic value files stored in the same terminal.
Fig. 11 is a diagram which explains a method for moving a value between electronic value files, each file being stored in a different terminal from another terminal storing the other file.
Fig. 12 is a diagram which explains a method of theft prevention by encryption.
Fig. 13 is a diagram which explains a method of improving safety by confirmation data or a password.
Fig. 14 is a diagram which explains a method of specifying a recipient.
Fig. 15 is a flowchart from receiving a request for issue of management data (an electronic value file) until issue of the management data.
Fig. 16 is an example diagram of an issue request for management data.
Fig. 17 is an example diagram of a table in which the contents of a value are correlated with a value ID.
Fig. 18 is an example diagram of a table in which a value ID is correlated with matching data.
Fig. 19 is an example diagram of management data.
Fig. 20 is a sequence diagram which shows the process of communication between a terminal which issues a request and a server device.
Fig. 21 is a function block diagram of a server device related to one embodiment of the present invention.
Fig. 22 is flowchart of the processes in a server device related to one embodiment of the present invention.
Fig. 23 is a function block diagram of a server device related to one embodiment of the present invention.
Fig. 24 is an example diagram of a table in which a value ID is correlated with matching data.
Fig. 25 is an example diagram of a table in which a value ID is correlated with matching data.
Fig. 26 is an example diagram of management data in which matching data has been replaced.
Fig. 27 is an example diagram of a table in which a value ID and validity information are correlated with matching data.
Fig. 28 is an example diagram of a table in which a value ID and validity information are correlated with matching data.
Fig. 29 is an example diagram of a table in which a value ID and validity information are correlated with matching data.
Fig. 30 is a sequence diagram which shows the flow of management data between a transferrer's terminal, a server and a receiver's terminal.

### EXPLANATION OF REFERENCE NUMERALS

- 2100: Server Device
- 2101: Communication Interface
- 2102: Receiving Part
- 2103: Judgment Part
- 2104: Invalidation Part
- 2105: Matching Data Preparation Part
- 2106: Replacement Part
- 2107: Transmission Part

### BEST EMBODIMENT FOR CARRYING OUT THE INVENTION

The embodiments of the present invention are explained based on several examples while referring to the diagrams.

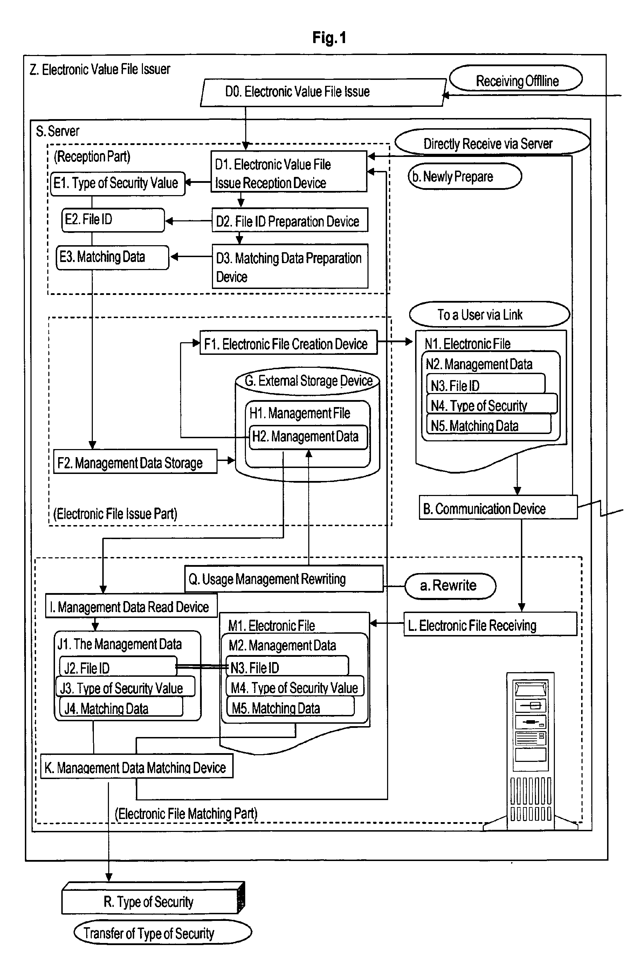

Hardware and a functional configuration are explained while referring to Fig. 1. Furthermore, except for an external storage device and a communication device, each device is realized by using, for example, a computer etc. the architecture of which comprises a CPU (central processing unit), a memory, a secondary storage device, an input/output device, and a communication interface etc. connected mutually by a bus, and by making the computer etc. read a program. That is, it is possible to realize a computer system in which various programs are used. However, using a program is not essential , it is also possible to realize by a configuration which mainly uses electronic circuits.

### (1. Hardware and device configuration, functional configuration)

The construction of a server (S) of an electronic value file issuer (Z) is as follows. That is, the server (S) includes a reception part, an electronic file issue part, and an electronic file matching part.

In addition, a communication device (B) is also used in an embodiment of the present invention. The communication device (B) is connected to other devices via a communication link. The communication device (B) may be a part of the server (S) or be of a separate construction. In addition, there are various forms such as wireless, fixed line, metal cable, optic cable etc for realizing the communication link and any of these can be used in the present invention. Also, the communication link may be connected to a communication network via the Internet etc. Alternatively, the communication link may also be connected to a leased line for communication with a specific person.

The reception part includes an electronic value file issue reception part (D0) which receives a request (C1) from a user (A), and an electronic value file issue and reception device (D1) which performs this reception within the server (S). Furthermore, a file ID preparation device (D2) is also included. This file ID preparation device (D2) usually prepares a file ID (E2) and a value of a type of security (E1, hereinafter referred to as security type value) of an electronic value file (hereinafter referred to simply as an electronic file), the file ID being prepared by either choosing among IDs which have been already prepared or generating an ID, the electronic file being usually generated after the user has paid a price. The file ID is, for example, generated as a number so it becomes a sequence of numbers and made so that the same file ID is not prepared twice or more. In addition, a random number may also be used. The random number may also be a pseudorandom number. Also, the reception part includes a matching data preparation device (D3). The matching data preparation device (D3) choose a piece of matching data (E3) among those prepared in advance or generates it to prepare it (hereinafter, a piece of matching data is sometimes referred to as matching information) similar to the preparation of the file ID by the file ID preparation device (D2). Here, a random number is good for use as the matching data (E3) which is used. This is because it is possible to actually make the prediction of a value which is generated in the future substantially impossible. In addition, if a certain value is used as a matching data (E3), it is preferably not prepared so as not to be used twice. In order to achieve this, a sufficiently long bit length random number may be used. This is because by using a random number of a sufficiently long bit length, it is known that random numbers generated at different times do not accidently match. Also, the history of the random number used is stored, a random number is generated, and by using a random number not included in that history as matching data, it is possible to prevent the same random number as matching data from being used a plurality of times.

Next, the electronic file issue part includes a management data storage device (F2) and an electronic file creation device (F1). The management data storage device (F2) stores the above stated security type value (E1) and the above stated file ID (E2) as the above stated matching data (E3) in a management file (H1) in an external storage device (G). The electronic file creation device (F1) creates an electronic file (N1) which has the above stated security type value (N4) which is the management data (N2) the same as the above stated management data (H2), and the above stated file ID (N3) and the above stated matching data (N5) stored in itself. Furthermore, in Fig. 1, an electronic file is shown to be created after reading out contents which are stored in the external storage device (G) once. However, the above stated security type value (E1), the above stated file ID (E2), and the above stated matching data (E3) may be received directly from the reception part without going through the external storage device (G) and an electronic file may be created. Alternatively, an electronic file may be created by receiving the management data directly from the management data storage device (F2). The file ID (N3) as well as the security type value (N4) and the matching data (N5), which are the object of the current processing, may be stored in the electronic file (N1) which includes the management data created currently. Furthermore, an electronic file is a unit for storing a series of bits in a computer or a memory media connected to a computer.

Furthermore, the security type value (E1) is data which represents a value embodied by a security, etc. For example, it may be a value which shows a currency value itself as a unit of the dollar, or as is stated below an identification number (for example, sometimes referred to as a value ID) for representing various values. In the case where the data is described as a value ID, the value ID may be the same as or different from the above stated file ID. The value ID may also be the same as or different from the matching data. In addition, the security type value (E1) may also include image data obtained by photographing a currency note etc.

The management data (H2) which is the same as this management data (N2) is also stored in the management file (H1) of the server (S) of the above stated electronic file issuer (Z).

Data is comprised from electromagnetic bit arrays and the bit arrays themselves include information. As a result, it is possible to make (copy) bit arrays which can not be distinguished from the original at all. Here, it is possible to make the management data (H2), the management data (N2), and data (E1, E2, E3, N3, N4, N5 respectively) which comprises this management data, all the same.

Furthermore, the meaning of the word "same" may be taken as physically the same, or it may mean being substantially the same while being physically different. In the above stated example, N5 may also be an encryption of E3 (or may be the reverse or N5 and E3 may be encrypted by different keys). The bit arrays become physically different before and after the encryption. However, when decryption is performed, it can be said that N5 and E3 are essentially the same with the meaning that physically the same bit array is obtained. That is, it can be said that N5 and E3 are the same. In addition, while image information may be included such as a currency note in the security value (N4) so that the value can be confirmed when online communication with the server is not possible, in the case of storing in the management file (H1) and in the case such as storing where the image information such as a currency note has been deleted, if at least the matching data is the same, it is judged as being the same as management data. If required, a judgment as to whether a file ID is the same or not may be further performed in a judgment as to whether it is the same or not as management data.

Furthermore, the present invention is not limited to a particular case as to how an electronic value file is stored. Thus, the present invention is explained so that an electronic file and management data which is the data stored in the electronic file is regarded as the same thing.

The electronic file matching part includes an electronic file receiving device (L), a management data reading device (I), a management data matching device (K), and a usage management rewriting device (Q). The electronic file receiving device (L) receives an electronic file (P1) which is sent from a terminal (T) of a user (A). The management data read device (I) reads a security type value (J2) and the matching data (J3) which are stored in the management data (H2) saved in the external memory device (G), the management data (H2) having a file ID (J1), which is the same as the file ID (M2) of the received electronic file (M1). The management data matching device (K) matches security type value (M3) from the received electronic file (M1) with the matching data (M4) and confirms validity by judging whether they are the same or not. The usage management rewriting device (Q) makes, in the case where the above stated validity is confirmed, the above stated server (S) rewrite matching data from among the management data (H2) stored in the management file (H1) stored in the above stated server (S) or invalidate the management data (H2) which is stored in the management file (H1) of the server (S) so that the management data (H2) becomes unusable.

Furthermore, an explanation is given, so far, of the electronic file consisting of the three parts, namely file ID, security type value, and matching data. By correlating and managing matching data with a security type value it is not essential to include a security type value in an electronic file within the management server (S) etc of an electronic value file issuer (Z) etc. In addition, by sufficiently increasing the bit length of matching data, it is possible to ensure that two pieces of matching data are not the same. As a result, in the case where matching data is stored unchanged in a server (S) without encryption, it is also possible to use the matching data as the file ID. Therefore, in the case where matching data is stored unchanged in a server (S) without encryption, it can be said that a file ID is not essential.

Furthermore, in the case where only matching data is included in an electronic file, the following is performed in order to know what security type value has been correlated with an electronic value file or in order to confirm the contents of a security type value included in an electronic file. On a user side, a hash function which is one type of irreversible function such as SHA-1 (Secure Hash Algorithm - 1) is applied to matching data and a hash value is obtained. This hash value is transmitted to a management server (S) of an electronic value file issuer (Z) etc. In addition, in the management server (S) etc of the electronic value file issuer (Z) etc, the hash value which is obtained by applying the above stated hash function to matching data of management data stored in the external storage device (G), is correlated in advance with a security type value. When a hash value which is transmitted from a user is received by the server (S), a search is performed for the security type value correlated with the received hash value and the security type value which is searched is returned to the user. In this way, it is possible to prevent matching data from leaking to a third party by transmitting a hash value of matching data.

Furthermore, if a security type value is included in an electronic file, the following advantageous effects are obtained. That is, even in a state in which communication with a server (S) etc. can not be performed, the security type value included in the electronic file is displayed and it becomes easy to confirm a value which embodies the electronic file.

A file ID of an electronic file is an identifier for identifying the electronic file. The identifier is information for selecting one piece of unique data among several data. The data used here is management data which is stored in the electronic file and is saved in the management file (H1) in the external storage device (G). In addition, selection here means, in the electronic file matching part, reading from the external memory device (G) management data which holds a file ID which is the same as the file ID in the electronic file received from a terminal device (T). Specifically, this reading is performed by the management data reading device (I). As an irregular reading method, as stated above a hash value of matching data is correlated with management data, saved in advance in the external storage device (G) for example, and the management data is read by the received hash value. Even in this case, because one piece of unique data is selected, it can be said that the hash value of matching data includes the role of an identifier.

In this way, because the identifier is for selecting one piece of unique data, in the case where the identifier is encrypted and stored in the server (S), particularly the external storage device (G), encryption is performed for all the identifiers with the same key or a small number of keys (for example about five). Then, an identifier is provided and in order to make a selection, encryption is performed on the provided identifier and selection is performed. Therefore, encrypting individual identifiers with different keys is actually not possible. This is because it becomes necessary to encrypt the provided identifier with keys of the number of stored management data when the number of management data which is stored in the external storage device (G) increases. Calculating the above stated hash value can be regarded as encrypting all the management data with the same key.

Alternatively, if an identifier of management data such as a file ID exists, it is possible to encrypt the matching data of each piece of management data with different keys and store in the external storage device (G). This is because in this case, a key may be received together with an electronic file from the terminal device (T). In other words, with the identification by the file ID in the received electronic file, the electronic file matching part reads management data stored in the external storage device (G), decrypts the read management data with the received key and judges whether it becomes the same as the matching data of the received electronic file. In this way, the construction in which individual matching data is encrypted with different keys is explained again in the section "10. Theft prevention by encryption."

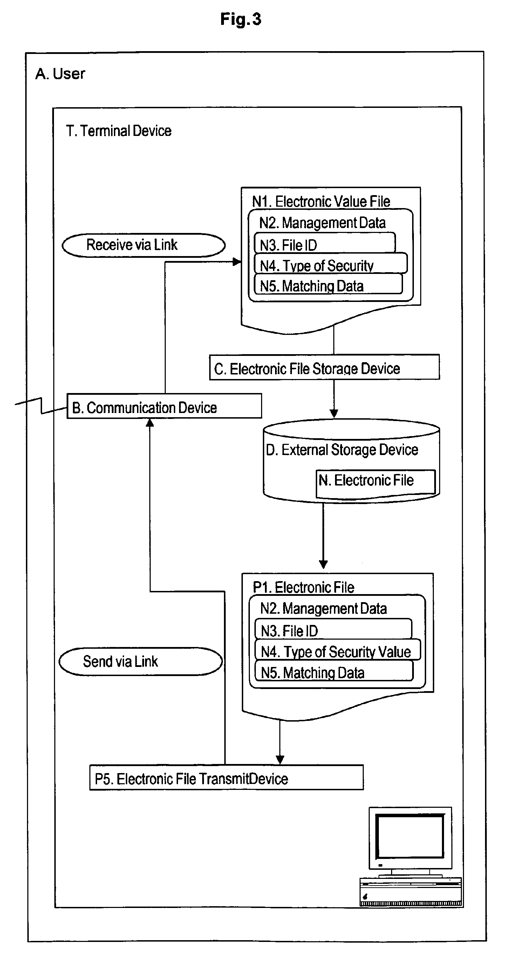

Next, the devices and function configuration of a user side is explained with references to Fig. 3. The configuration of the terminal device (T) of a user (A) is as follows. The terminal device (T) includes a communication device (B) for connecting to other devices via a communication link, an electronic file storage device (C), and an electronic file display device (P5). The electronic file storage device (C) stores in the external storage device (D) an electronic file (N1) which is received form a third party which has received an electronic value file using a server of an electronic value file issuer or the main system. The file may also be encrypted and then stored. The electronic file transmit device (P5) reads the electronic file (N) stored in the external storage device (D) and sends the read electronic file (P1) in the server (S) of the electronic value file issuer (Z). The terminal device (T) can easily be realized by installing a program into a PC or a mobile terminal. Because a PC or a mobile terminal includes a display screen, it is easy to display the above stated security type value.

Furthermore, in order to transfer an electronic file to a recipient, various methods such as a method of attaching to an electronic mail, a method of uploading to the server of the recipient side, or a method of connection between terminals of the users by peer to peer via a communication link which may realize a wireless communication such as an infrared communication or a fixed line communication and transmitting management data via this connection and sending an electronic file are possible.

A browser may be used in order to realize each device of the terminal devices (T) using a communication link on the Internet. A program in this case reads the result of an output such as an HMTL file on the server (S) or a CGI (Common Gateway Interface) which operates on the server (S), and displays it on the browser of the terminal device (T). However, the present invention does not exclude realizing by dedicated hardware or software.

### (2. Entire Embodiment, flow of electronic value file)

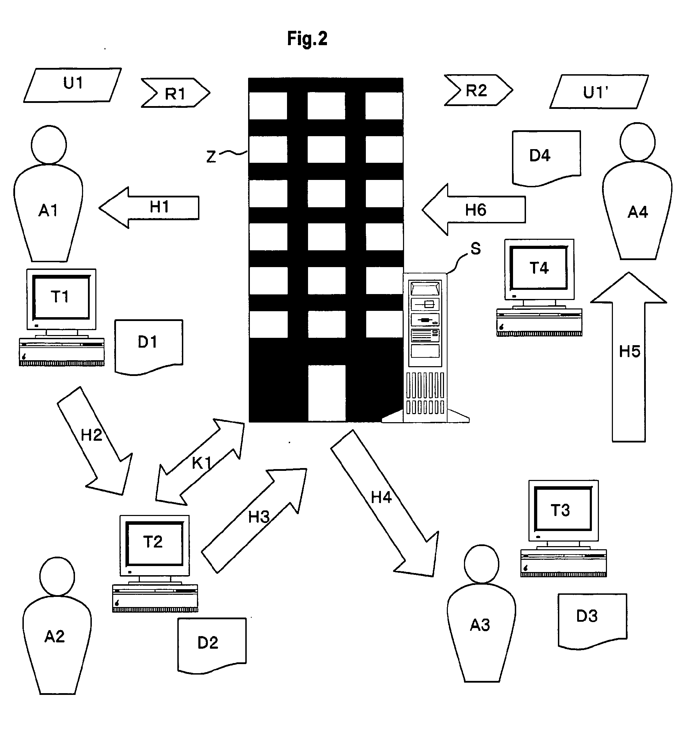

Next, an entire embodiment with a flow of an electronic value file is explained with references to Fig. 2. A user (A1) either brings a security (U1) to an issuer (Z) as is shown in the security flow (R1), or pays for the security to the issuer (Z). Next, the user (A1) connects to the server (S) of the issuer (Z) using a terminal device (T1) via a communication link and receives an electronic value file (D1) in the terminal (T1) as is shown in the flow (H1) of the electronic value file transfer. Alternatively, the user (A1) receives the electronic value file (D1) stored in storage media etc at the counter of the issuer (Z). In addition, a character string or a barcode printed on paper for example may be received and input and read in the terminal device (T1).

The user (A1), using the terminal device (T1), transmits the electronic value file (D1) to a terminal device (T2) of a recipient (A2) via a communication link as is shown in the flow of the electronic value file transfer flow (H2). In this case, it is not always necessary that the terminal device (T1) of the user (A1) and the terminal device (T2) of the user (A2) be simultaneously connected, for example, in the case of attachment by email, both send and receive via email. In addition, a user performs encryption so that a recipient is able to perform decryption and the recipient may download a file uploaded to a public server.

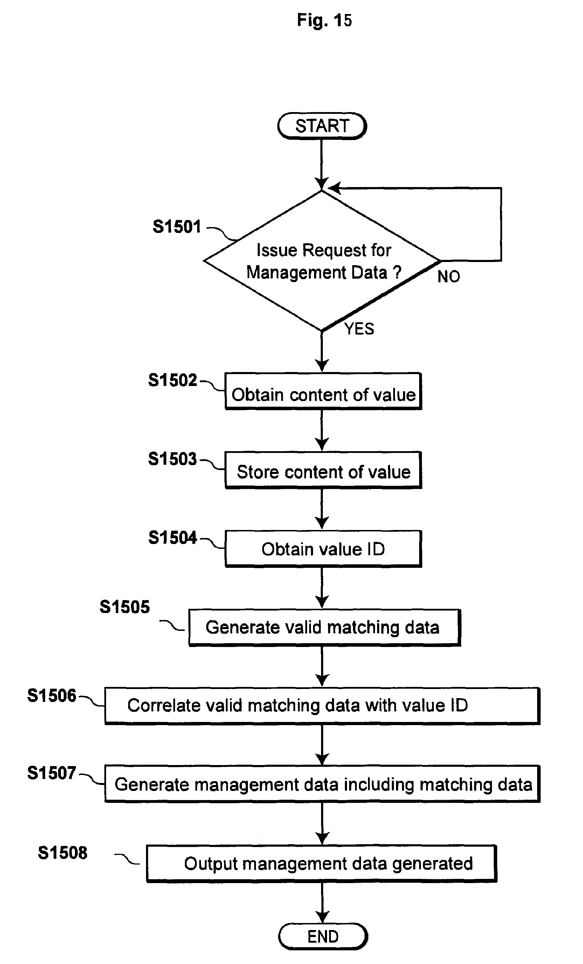

Fig. 15 shows a flowchart of the processes performed in the server (S) after the server (S) of the electronic value file issuer (Z) receives an issue request for management data from the terminal (T1) of a user until the management data is output.

At step S1501, a waiting process is performed until there is an issue request for management data. For example, the electronic value file issue reception device (D1) waits until a signal is generated, the signal indicating that the reception of an electronic value file issue is performed. The process at step S1501 does not have to be realized by a busy loop as is shown in Fig. 15, and specifically the process may be realized by issuing a WAIT system call which is provided by the operating system of the server (S). In this way, the electronic value file issue reception device (D1) waits until a signal is generated, the signal indicating that the electronic value file issue is received and needless operations can be omitted.

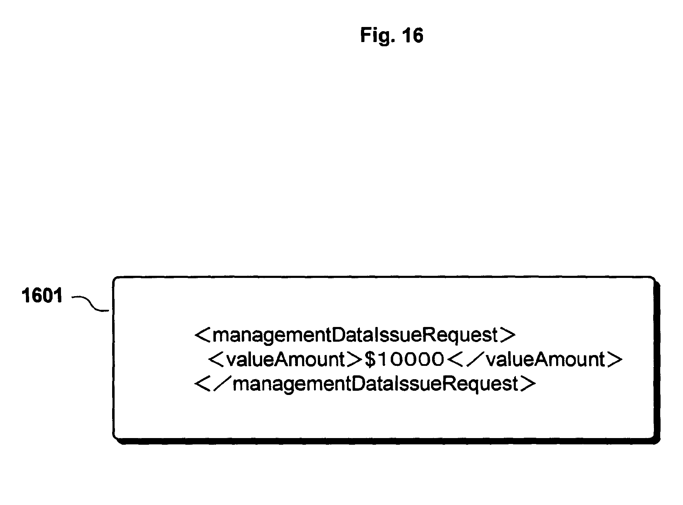

Fig. 16 shows an example where an issue request for management data is expressed in the form of XML (extensible Mark-up Language). In Fig. 16, the section enclosed by "<managementDatalssueRequest>" and "</managementDatalssueRequest >" shows the contents of the request for management data issue. For example, the content or the amount of a security type value is shown. In Fig. 16, because "$ 10000" is enclosed by <valueAmount>" and "</valueAmount>", this means that an issue of management data which shows the value of 10,000 dollars is requested. Furthermore, a user pays the value of 10,000 dollars by credit card or by a bank transfer to the electronic value file issuer (Z) or pays by bringing cash to the window of the electronic value file issuer (Z). In addition, the electronic value file issuer (Z) may also loan 10,000 dollars to the user.

At step S1502, the server (S) obtains the contents of the value included in the issue request for management data. In the issue request for management data shown in Fig. 16 "10,000 dollars" is obtained as the contents of the value.

Next, at step S1503, the contents of the value obtained at step S1502 are registered. In the case where an issue request for management data shown in Fig. 16 is obtained "10,000 dollars" is registered. Registration is realized, for example, by inserting into a table formed in a nonvolatile memory part (for example, an electromagnetic disk) in the server (S). For example, a 10 byte length is provided for a value ID which is an ID which identifies the registered value, a 502 byte length is provided for the contents of a value and the contents of the value and its ID are inserted into a table in which the length of one record is 512 bytes. The length of one record is not limited to a fixed length and it is possible to make the length of one record variable by adjusting the configuration of a file.

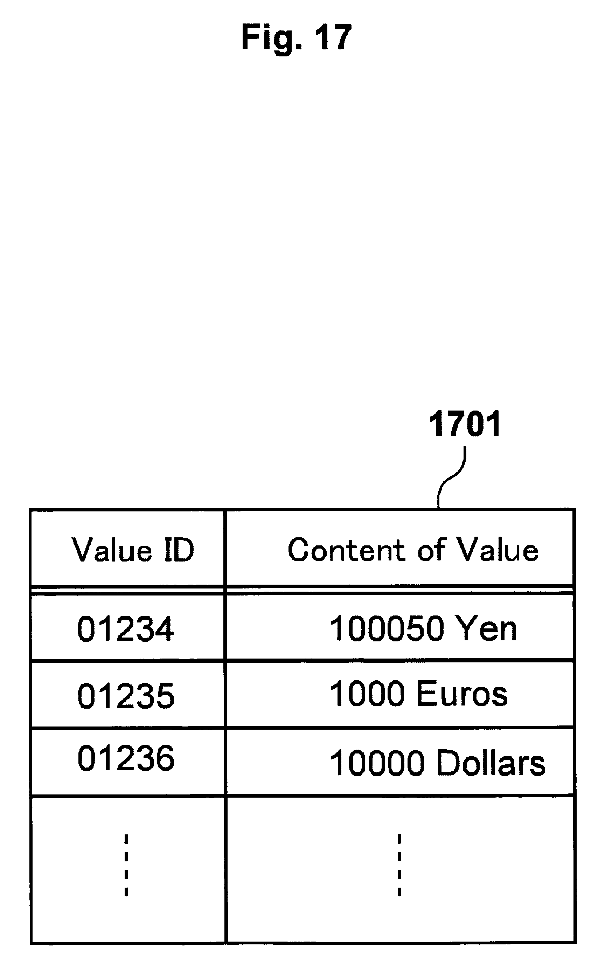

Fig. 17 shows one example of a table 1701 in which a value ID and the value contents are correlated and the value contents are registered. The table 1701 comprises a column named "Value ID" and a column named "Content of Value" and the value of the value ID and the value of the value contents are stored in one record. The value ID may be, for example, a sequence of numbers. In Fig. 17, a currency value is mainly stored as the value contents. However, a value (for example, a character string) which shows an arbitrary value may also be stored. For example, various values representing a product voucher (for example, rice voucher, beer voucher), a train ticket, a concert entrance ticket, etc. may be stored.

Next, at step S1504, a value ID is obtained. The value ID used here refers to an ID attached to the contents of the value registered in step S1503. For example, a counter which counts the number of records held in the table 1701 is arranged in the server (S) and by reading the value of the counter the value ID may be obtained. In addition, if the length of one record is a length fixed at 512 bytes, it may also be a quotient of 512, which is the size of the file stored by the table 1701.

Furthermore, the security type value (for example, E1) and the file ID (for example, E2) in Fig. 1, can be thought of as corresponding to the "Content of Value" and the "Value ID" explained here. However, it is not necessary for the file ID to be directly corresponded with a value content. There are various options for correlating a file ID with a value content.

Next, at step S1505, valid matching data is generated. The processes at step S1505 correspond, for example, to the processes in the matching data preparation device (D3) in Fig. 1. When matching data is generated, it is preferred that the same matching data is not generated multiple times. In addition, it is also preferred that a third party can not actually predict matching data generated in the future. Thus, for example, a random number of 64 bits, 254 bits, 1024 bits, or a longer random number is generated and in addition, the history of a random number used as the valid matching data is prepared so that it can be stored on an electromagnetic disk for example, and if the generated random number is not included in that history, this random number is added to the history and used as valid matching data. As stated above, the matching data may be generated when required or a plurality of matching data may be generated in advance, stored on a memory media such as an electromagnetic disk, and read when required.

Furthermore, "valid matching data" is defined as data correlated with a security type value (a value content) and managed in a server (S). That is, stored in the external storage device (G) as data which comprises one part of the management data. Alternatively, in the case where matching data is correlated with data (validity data) indicating whether the matching data is valid or not and in the case where the matching data is managed in the server (S), matching data is defined to be valid when the validity data which is correlated with the matching data indicates that it is valid. Furthermore, the matching data may be encrypted and stored. For example, every time matching data is generated a key is produced and the matching data maybe encrypted with this key and stored. Then, this key may be output together with or separately from the matching data at step S1508 explained below.

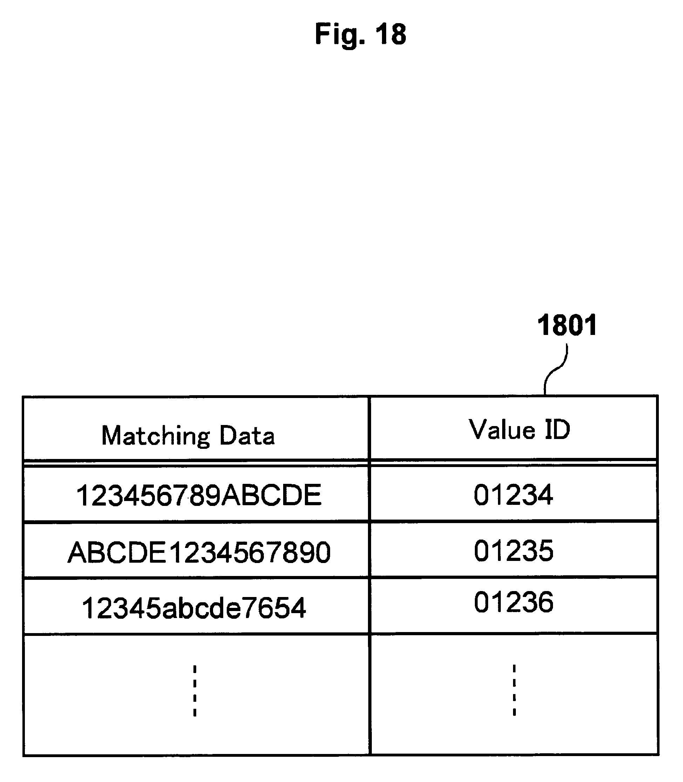

Next, at step S1506, the value ID obtained at step S1504 is correlated with the matching data generated at step S1505 and the value ID and matching data are stored. In this way the matching data becomes valid matching data as defined above. Correlation is performed by, for example, inserting a record which includes the value ID and the matching data into a specific table. The table 1801 comprised from a record which is comprised from matching data and a value ID as shown in Fig. 18, is used as this type of table. This type of table is stored as a management file (H1) in the external storage device (G).

Next, at step S1507, management data is generated which includes the matching data correlated at step S1506 with the value ID generated at step S1505. For example, the matching data may be used as matching data without change. In addition, information such as the date and time of creation may also be further added. In addition, the matching data may be encrypted with a certain encryption key and the management data stored. For example, the matching data may be encrypted with a public key corresponding to a secret key held by a user.

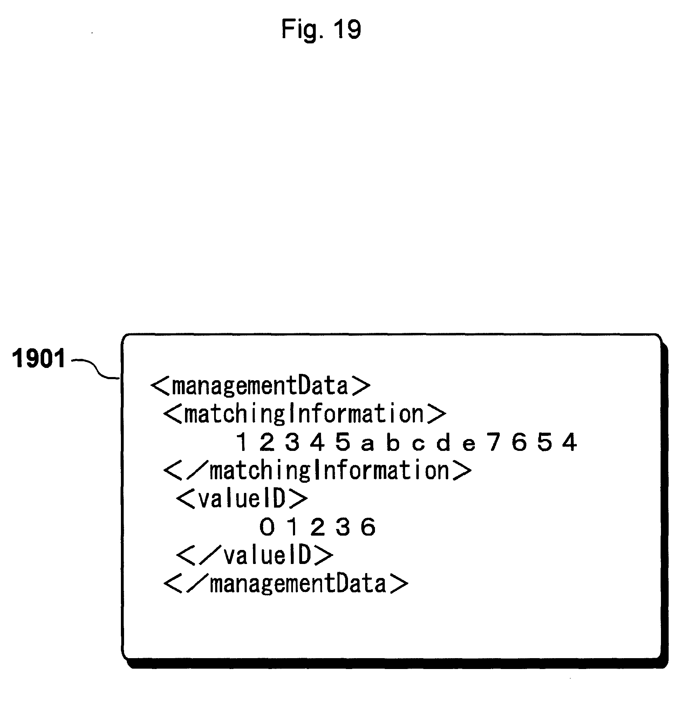

Fig. 19 shows an example of management data. In Fig. 19, in the case where the value ID obtained at step S1504 is "01236" and the matching data generated at step S1505 and correlated with the value ID at step S1506 is "12345abcde7654", are expressed as XML data unchanged. Including the value ID in the management data is not essential as stated above. Including the value ID is convenient for knowing the value content which the management data represents. For example, when a user makes an enquiry by sending the value ID to a server (S) and receives a reply, it is possible to know the value content. In addition, in the case where the value ID is sent to the server (S), the value ID is sent together with the hash value of the matching data as stated above, and the matching data which includes the received hash value is confirmed as to whether it is correlated with the received value ID and the value content may be returned.

In addition, instead of including the value ID in the management data, image data which shows the value may be included as stated above. Image data of an entrance ticket which is represented by the management data or image data of a currency note may be used as image data which shows its value. When image data is included in management data and the size of the management data becomes large, the possibility of damage, loss, copying or forgery increases. Thus, in order to detect whether there is any damage, a checksum of the matching data and image data, or signature data in which a hash value of the matching data and image data is encrypted by a secret key is included in the management data. In order to display the security value on the terminal device (D) for example, confirmation of the signature data is performed and in the case where confirmation can be made, the image data etc may be displayed. In the case where the signature data can not be confirmed, data which includes the matching data is sent and a reissue request of management data maybe be made to the server (S).

At step S1508, the management data generated at step S1507 is output. For example, the management data may be transmitted to the terminal of a user by an electronic method such as by electronic mail from the communication device (B), or stored in a storage media such as a memory card and sent by post. Alternatively, the management data is stored in advance until the terminal of a user connects to a server (S) and once it is detected that the terminal of the user has connected to the server (S) the management data is transmitted. Alternatively, the management data maybe printed on a media such as paper as a character string or printed as a barcode for example and transmitted by post.

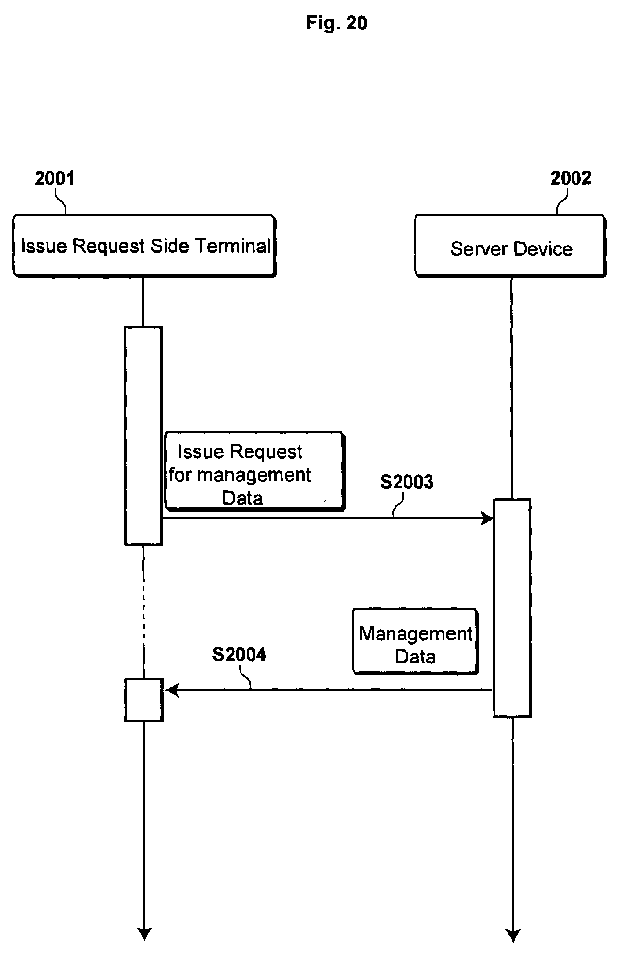

Fig. 20 is a sequence diagram which explains the communication process which takes place between an issue request side terminal 2001 such as the terminal device (T) which the user uses for an issue request for management data, and a server device 2002 such as the server (S). First, at step S2003, an issue request for management data is transmitted to the server device 2002 from the issue request side terminal 2001. Then, the flowchart processes shown in Fig. 15 are performed by the server device 2002 or different server device (this server device may also be the server (S)), which is connected to the server device 2002. As a result, the management data, which is output, is transmitted to the issue request side terminal 2001 at step S2004. The storage process of the management data is performed in the issue request side terminal 2001.

In Fig. 20, the issue request side terminal 2001 transmits an issue request for management data and by this the issued management data is transmitted to the issue request side terminal 2001. However, the present embodiment is not limited to this type of form, information (for example, an email address of the transmission recipient of the issued management data or an IP address which identifies a terminal) which specifies the transmission recipient of the issued management data, may be included in the issue request for management data and the server device 2001 may be made to transmit the management data to the specified transmission recipient.

The recipient (A2) connects to the server (S) of the issuer (Z) via a communication link using the terminal device (T2) and sends an electronic value file (D1). When the server (S) confirms that the electronic value file has been issued by the issuer (Z) (that is, when the matching data is valid), the matching data is rewritten as is shown by the flow (K1) of the rewriting of the electronic value file, and the obtained electronic value file (D2) is received. Details of this part are stated in the section "4. a method for receiving and confirming an electronic value file without passing through a server." The recipient (A2) connects to the server (S) of the issuer (Z) via a communication link using the terminal device (T2), a new recipient (A3) is specified and the electronic value file (D2) is sent as is shown in the flow (H3) of the electronic value file.

Furthermore, in the case where a file ID (for example, N3) is included in the electronic value file, that file ID may be rewritten along with the matching data. In addition, when the matching data is rewritten, the electronic value file issuer (Z) may collect a charge for the rewriting. This charge may be collected by changing the amount or content of the value which is correlated with the matching data. The value ID, for example, may also be rewritten together with the amount and content of the value. For example, a charge to be collected is subtracted from the 10,000 dollars, and the remaining 9,999 dollars are correlated with a new value ID and this new value ID may be correlated with new matching data.

The issuer (Z) matches the sent electronic value file (D2) using the server (S) and when an affirmative confirmation is performed (that is, when the matching data is confirmed as valid), the matching data is rewritten and the above stated specified recipient (A3) receives the electronic value file (D3) via a communication link after rewriting as is shown by the flow (H4) of the electronic value file. Details of this part will be stated in the section "3. method for receiving an electronic value file through a server."

Using the terminal device (T3) the specified recipient (A3) makes the terminal device (T4) of the final recipient (A4) receive the electronic value file (D4) via a communication link as is shown in the flow (H5) of the transfer of the electronic value file.

The final recipient (A4) connects to the server (S) of the issuer (Z) using the terminal device (T4) via a communication link, sends the electronic value file (D4) and requests an exchange with a security, and the issuer (Z) confirms by matching operation in the server (S) the electronic value file (D4) sent from the terminal device (T4) and when the validity of matching data is confirmed, a type of security (U1') is transferred as is shown in the flow (R2) of the security, or its right is enforced. Details of this part are stated in the section "8. method for exchanging an electronic value file with a security."

In this way, the type of security (U1) is transferred to the final recipient (A4) from the user (A1). The type of security (U1') which is transferred to the final recipient (A4), may be the same as that brought by the user (A1), however if the content of the enforcement of the right which is held by the type of security (U1') is the same, then it is not necessary to be physically the same. Of course, in the case of collecting a charge by rewriting the matching data, the content of the enforcement of the right which is held by the type of security (U1') and the content of the enforcement of the right held by the type of security (U1) are not exactly the same, however, if the charge which is collected is considered, it is possible to consider them as essentially the same.

Among types of securities there are usual securities (stock certificates, receivables, purchase vouchers, bonds) or tickets which indicate the right to receive a service, securities such as magnetic cards such as telephone cards, and securities such as points such as games or shopping. In addition, an exchange voucher (a rice voucher, a beer voucher) which indicates the right to receive an object is also a security.

In addition, when exchanging an electronic value file with a security, in the case of an object, either that object is received or a certificate to use and own that object is received. In the case of a security, either a printed certificate is received or the right held by the certificate is enforced. For example, in the case of a ticket with a right to receive a service such as riding a vehicle, a show, or a use of facilities, either that ticket is received or the service which is the object of the ticket is received, in the case of a game, points, or chips, those points or chips are received, an object which can be received for the points or chips is received, in the case of a product exchange certificate or discount ticket, either that product exchange certificate or discount ticket or the product or discount is received, in the case of a security, either that security is received or that amount is received and each right is either received or enforced.

In the case where the electronic value file which has been transferred is exchanged to a security and used, the present system can be considered as a system which transfers the right of a security and even if the security does not have substance, enforcing the right by only the electronic value file does not change the principle of the transfer in the system. Of course, a printed object such as a ticket, a coin-like jeton, or a game chip which can enforce a right when using an electronic value file may also be exchanged.

Of course, the issuer of an electronic value file or a person who has a contractual relationship with the issuer (for example, a bank) guarantees an object and a type of security or a right held by this type of security. In order for the issuer of an electronic value file to guarantee a type of security or a right held by this type of security, the first user pays the amount for receiving that object and the type of security or they must bring that type of security to the issuer of the electronic value file. When transfer of the electronic value file related to the present invention is performed, in the case where the type of security can be transferred via a communication link, even if the type of security is not brought before the issuer of the electronic value file, it is possible to bring it via a communication link.

There are a variety of well known methods of payment to the issuer of an electronic value file. Payment by credit is the most used form of payment on the Internet. This method can be completed entirely within the Internet. There are many other methods but the details are omitted. In addition, transfer of an amount (object or service) is of course conducted between the parties when transferring an electronic value file, however, while there are many methods in the actual economy and of course in the virtual net, a detailed explanation is omitted here.

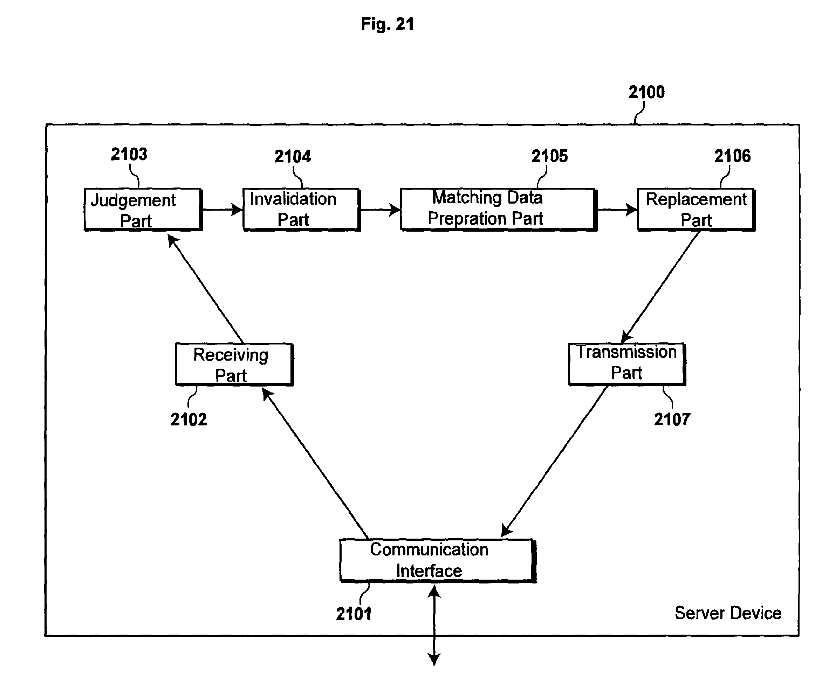

Fig. 21 shows a function block diagram of a server device which, when management data is received, makes matching data which is included in this management data invalid, replaces the matching data with different matching data, and transmits the obtained management data. In one embodiment of the present invention, by transmitting management data to another user via this type of server device it is possible to perform transfer of management data. In addition, the user who receives the management data from another user can make the management data usable by only the user alone by transmitting the received management data to this server device and receiving the returned management data. In addition, even if the management data which the user manages by himself is stolen, it is possible to make the stolen management data invalid by transmitting the management data to the server device before the theft uses the management data.

As is shown in Fig. 21, the server device 2100 includes a communication interface 2101, a receiving part 2102, a judgment part 2103, an invalidation part 2104, a matching data preparation part 2105, a replacement part 2106, and a transmission part 2107.

The communication interface 2101 is a part for performing communication with a terminal. A terminal is a device operated by a user. For example, it is a terminal device (T). The communication interface 2101 comprises a hardware device (for example, communication device (B)), for exchanging data with a device external to the server device 2100 and a device driver etc for driving this type of hardware device. For example, data which is transmitted towards the server device 2100 is received from the exterior of the server device 2100, the communication interface 2101 generates a signal and initiates a function corresponding to this signal, reading is performed to a predetermined buffer and data can be read by a program which operates within the server device 2100. In addition, when transmission of data to the exterior of the server device 2100 becomes possible, the communication interface 2101 judges whether there is data written to a predetermined address by a program which operates within the server device 2100 and if such data exists, transmits the data to the exterior.

The receiving part 2102 receives, by using the communication interface, management data which is transmitted from a terminal and which includes matching data for judging whether it is valid or not. The receiving part 2102 may be realized as an independent device, for example, and it may be the electronic file reception device (L). Alternatively, it may also be incorporated into the server device 2100. For example, it may be realized by a program. This type of program, for example, can be realized by a program module which issues a WAIT system call to a specific file descriptor and if the management data can be read from this file descriptor, it performs a read processing. Management data includes matching data. This matching data is data which make it possible to judge whether it is valid or invalid in the server device 2100. This judgment is performed in the judgment part 2103 explained in the next paragraph. The management data is mainly transmitted from a terminal operated by a user. As another form, the management data may be transmitted from the server of a company such as a bank or a credit card company. Here, a server which transmits this type of management data is also regarded as one type of terminal.

The judgment part 2103 judges whether the matching data included in the received management data is valid or not. Regarding this validity judgment, in Fig. 1, (1) an electronic file (J1) which has the same file ID as a file ID (N3) of the electronic file received by the electronic file reception device (L) is read from the external storage device (G) by the management data read device (I), and (2) the management data matching device (K) judges whether the matching data (M5) and matching data (J4) are the same or not. Alternatively, a value ID is correlated in the server (S) which has carried out the processes of the flowchart in Fig. 15 and a judgment is made as to whether it is being managed as valid data. If the server device 2100 and the server (S) are the same, for example, a judgment is made as to whether it is stored in one of the records in the table 1801 shown in Fig. 18. In addition, if the server device 2100 and the server (S) are different, an enquiry of validity is performed from the server device 2100 to the server (S). As a result, an address of a server which generates matching data may be included in the management data. The server device 2100 makes an enquiry using this address.

In the case where the matching data is judged to be valid, the invalidation part 2104 invalidates the matching data. Invalidation is realized by rewriting matching data of the management data stored in the external storage device (G) by the use management rewriting device (Q). Alternatively, the value of this matching data, for example, a NULL value, is overwritten to a record of the table 1801 which holds the matching data. In addition, if the server device 2100 and the server (S) are different, a request for invalidating the matching data is transmitted to the server (S) from the server device 2100.

The matching data preparation part 2105 prepares new valid matching data. For example, matching data is generated as explained in step S1505 of the flowchart in Fig. 15. This process may be performed by the server (S) which enquires the validity of the matching data and may also be performed by the server device 2100.

The replacement part 2106 replaces the invalidated matching data of the received management data with the prepared new valid matching data and generates replaced management data, which is the obtained management data.

For example, let us assume that the management data 1901 shown in Fig. 19 is received by the receiving part 2102 and that the matching data "12345abcde7654" which is included in the management data 1901 is judged to be valid by the judgment part 2103. Then, the matching data "12345abcde7654" is invalidated by the invalidation part 2104. Then, "987654321ZYXU" is prepared as new valid matching data by the matching data preparation part 2105.

Then, the replacement part 2106 replaces "12345abcde7654" of the management data with "987654321 ZYXU" and generates replaced management data. Furthermore, when the replaced management data is generated, the content of a region such as a memory which is stored with the management data 1901, is copied and a copy of the management data is created, the matching data which is included in the copy of the management data may be rewritten as replaced management data. In addition, the matching data included in the management data may be directly rewritten as replaced management data without creating a copy.

In addition, the replacement part 2106 correlates the value ID "0123456" with "987654321ZYXU." This correlation is performed by the server device 2100 if the server device 2100 includes a memory part as stated above. If the server device 2100 does not include a memory part a request is made to an external device for the management of the validity similar to the use of the management rewriting device (Q), which makes a request to the external storage device (G) in Fig. 1.

Furthermore, in the case where the usage management rewriting device (Q) is used, by rewriting the matching data the processes stated above are performed as a whole by the matching data preparation part 2105 and the replacement part 2106.

The transmission part 2107 transmits the replaced management data to the terminal or a terminal which is different from this terminal using the communication interface. That is, the replaced management data is written to a predetermined address, and the communication interface 2101 is made to transmit the data. The transmission recipient may, for example, be the terminal which has made the receiving part receive the management data. Alternatively, at the same time or about the same time as when the receiving part 2102 receives the management data, information of the transmission recipient (an e-mail address, an IP address etc) may also be received and the replaced management data may also be transmitted to the transmission recipient.

In the case of Fig. 1, when the matching data of the management data stored in the external storage device (G) is rewritten by the usage management rewriting device (Q), this management data is sent to the communication device (B) from the electronic file creation device (F1) and sent to a device external to the server (S).

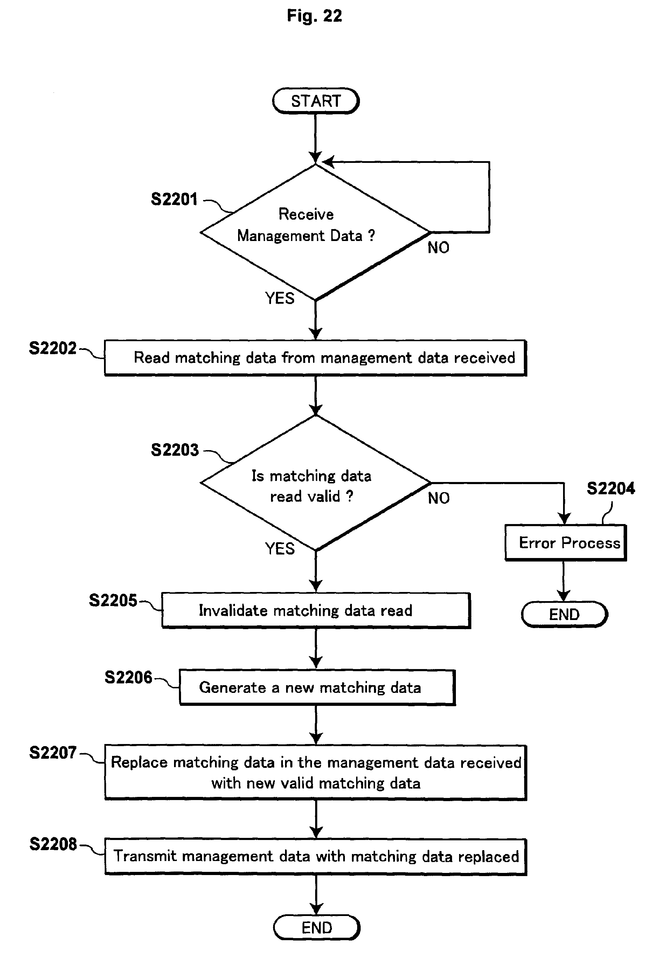

Fig. 22 shows a flowchart which explains the flow of the processes performed in the server device 2100. At step S2201, the communication interface 2101 enters a waiting state until management data is received. The entrance into this waiting state is realized by issuing a WAIT system call to a specific file descriptor for example. When the management data is received the process moves to step S2202.

At step S2202, the management data received by the communication interface 2101 is read by the receiving part 2102, and deployed to a work memory. Then, the matching data is read. For example, in the case where the management data 1901 is deployed, "12345abcde7654" is read as the matching data. The matching data which is read is stored in a newly allocated memory region etc.

In the next step S2203, a judgment of the validity of the matching data read at step S2202 is made by the judgment part 2103. For example, the matching data stored in the memory region is transmitted to the server (S) and an enquiry is made of the validity judgment. As a result, if the data is judged not to be valid, the process moves to step S2204, and an error processing is performed. Alternatively, because there is the possibility that there is an act of dishonesty, a warning may also be made to various related groups.

If the matching data is judged to be valid, the process moves to step S2205. At step S2205, the matching data read at step S2202 is invalidated by the invalidation part 2104. For example, a request for an invalidation process is sent to the server (S). Alternatively, (1) a validity enquiry and (2) a request for invalidation in the case where the matching data is valid may be performed in one communication.

Next, at step S2206, new valid matching data is generated by the matching data preparation part 2105.

Next, at step S2207, the matching data of the received management data is replaced with new valid matching data which is generated at step S2206 by the replacement part 2106. In this way, replaced management data can be obtained. The replaced management data which is obtained is stored in a work memory.

Next, at step S2208, the replaced management data obtained at step S2207 is transmitted to the transmission part 2107.

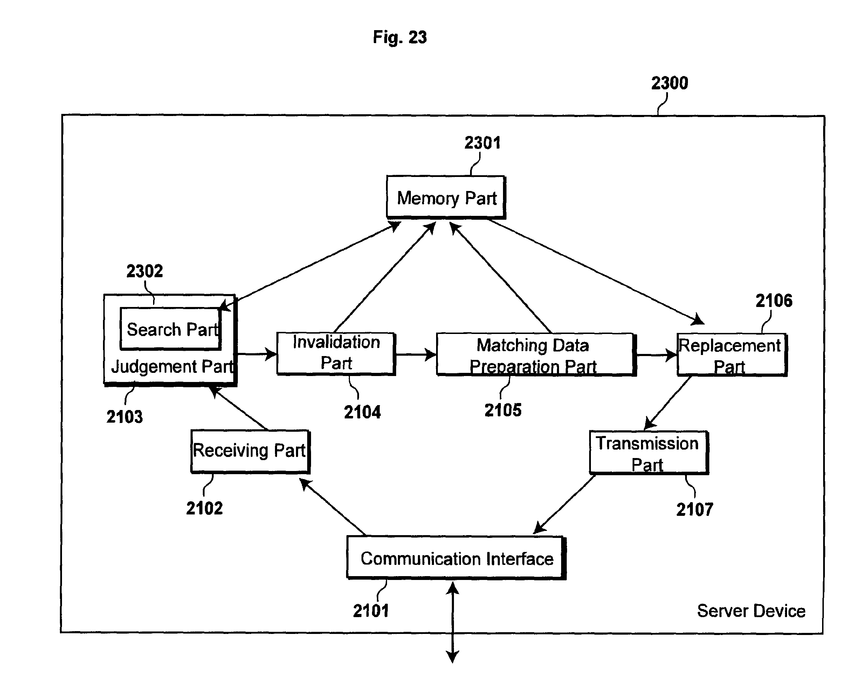

Fig. 23 shows a function block diagram of a server device in the case where the server device manages the validity of matching data in another embodiment of the present invention. A server device 2300 includes a communication interface 2101, a receiving part 2102, a judgment part 2103, an invalidation part 2104, a matching data preparation part 2105, a replacement part 2106, and a transmission part 2107 similar to the server 2100 stated above. In addition, the server device 2300 also includes a memory part 2301, and the judgment part 2103 includes a search part 2302.

The memory part 2301 stores valid matching data. For example, valid matching data is stored by storing the matching data correlated with a value ID using the table 1801 in Fig. 18. In addition, it is possible to store matching data in a table comprised of one row without correlating with a value ID and the conditions that the matching data which is stored in this table is valid matching data may be a sufficient condition, necessary condition or necessary sufficient condition.

The search part 2302 performs a search for whether the matching data included in the received management data is stored in the memory part. For example, when matching data is provided, the search part 2032 sequentially reads the values stored in the "Matching Data" column of the table 1801, judges whether they are the same as the provided matching data and if they are the same an address (for example, a row number which shows a sequence number of a certain numbered row) of a record of that time is returned. Alternatively, using an index (for example, B-tree index) defined for the "Matching Data" column, a judgment is made whether a search using this index by the given matching data is successful or not.

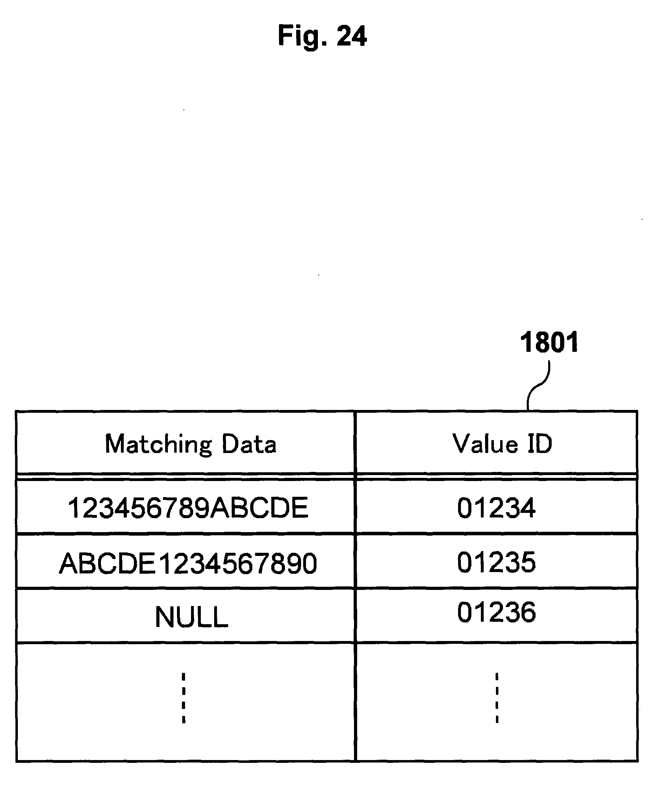

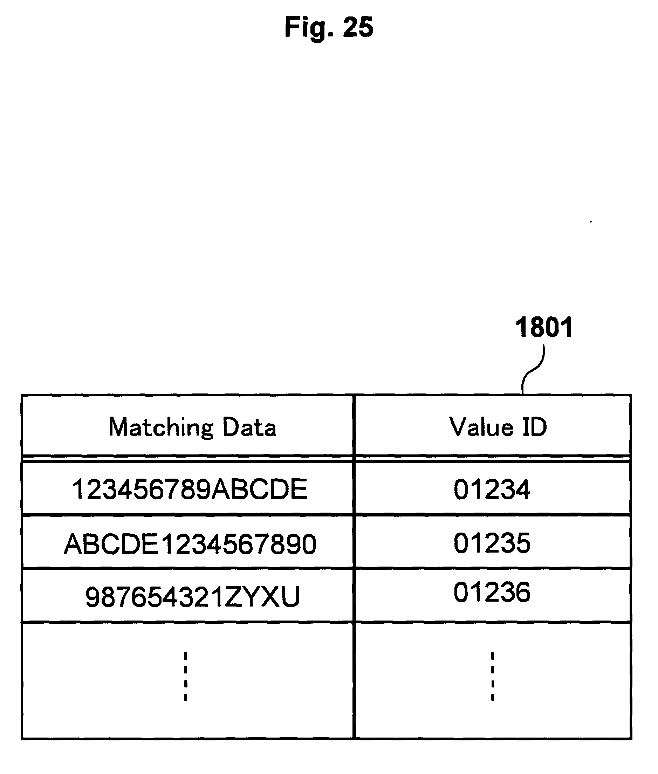

Fig. 24 and Fig. 25 are diagrams which explain that the management data 1901, which is shown in Fig. 19, is received by the receiving part 2102 and the processes after the result of a search by the search part 2302 is obtained that this matching data exists in the third row in the case where the table 1801 of Fig. 18 is stored in the memory part 2301. Furthermore, here, valid matching data means matching data which is stored in the "Matching Data" column of the table 1801.

The matching data "12345abcde7654" is deleted from the "Matching Data" column of the record of the third row in the table 1801 shown in Fig. 19 by the invalidation part 2104. For example, it is overwritten by the NULL value which is not the same as another value. Due to this overwriting, even if a search is performed for the matching data "12345abcde7654," the search fails and "12345abcde7654" is judged to be invalidated matching data.

Next, new valid matching data is prepared by the matching data preparation part 2105. The new valid matching data is generated, for example, by a pseudorandom number generator and the generated pseudorandom number is overwritten to the "matching data" column of the record which has been previously overwritten by the NULL value.

For example, a value "987654321ZXYU" is generated by the pseudorandom generator and referring to the history of the generated pseudorandom numbers, if this value is not a value generated thus far, it is overwritten to the "Matching Data" column of the record of the third row in the table 1801 and the state shown in Fig. 25 is obtained. In this way, "987654321ZXYU" becomes new valid matching data.

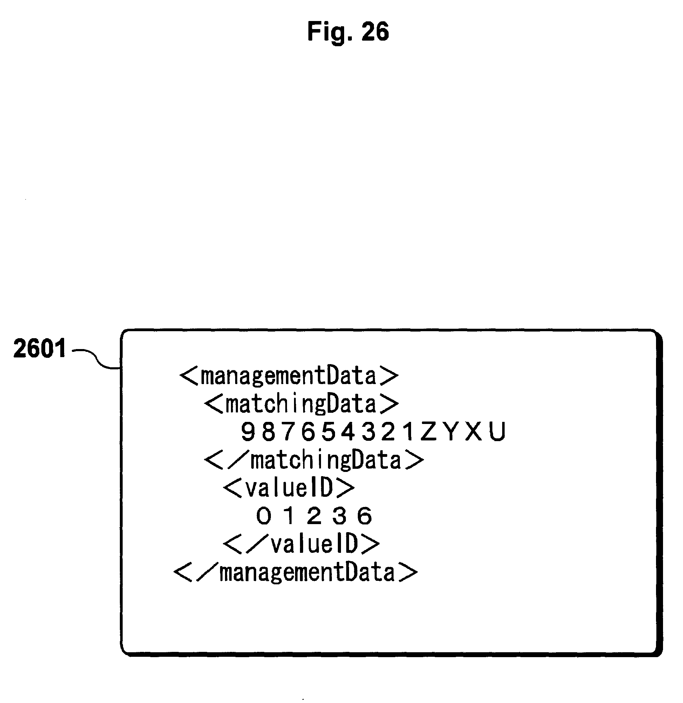

Fig. 26 shows the management data 2601 obtained by replacing the matching data "12345abcde7654" of the management data 1901 using the replacement part 2106 with the new valid matching data "987654321ZXYU." This management data 2601 is transmitted by the transmission part 2107.

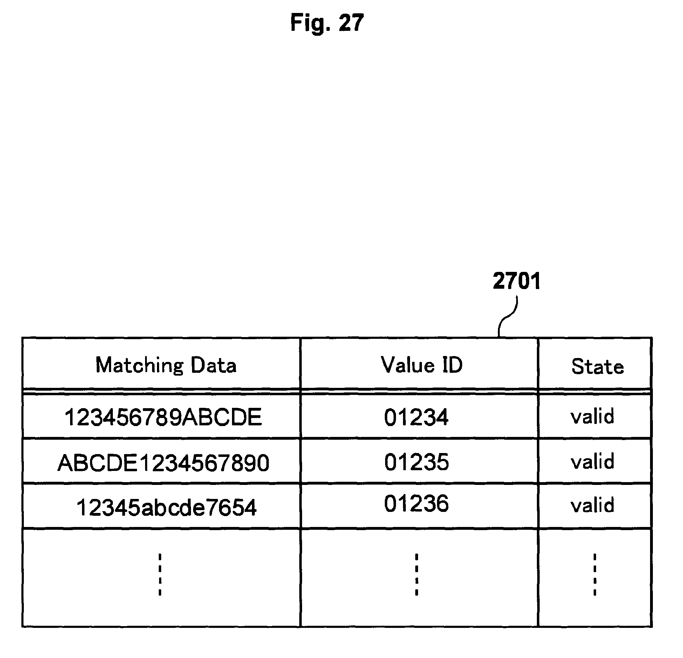

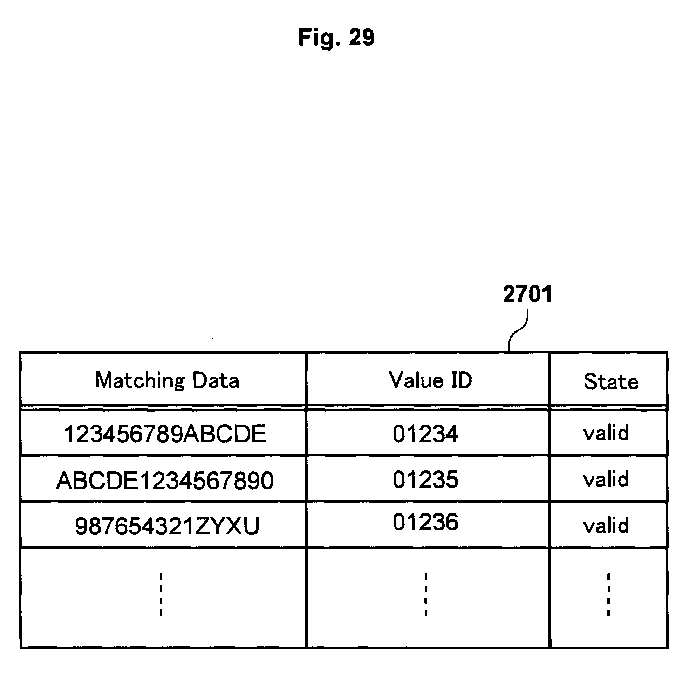

Fig. 27 to Fig. 29 are diagrams which explain the processes in the case where valid data which represents whether every matching data which is stored in the memory part 2301 is valid or not is correlated. As is shown in Fig. 27, a value ID is correlated with matching data and a value of a column named "State" is further correlated in the table 2701. The value of the column named "State" is a column which stores a value which represents whether matching data is valid or not. For example, in the case of Fig. 27, because the value representing "valid" is stored in the column named "State" of the record which stores one of "123456789ABCDE", "ABCDE1234567890", or "12345abcde7654", these matching data are judged as valid by the judgment part 2103.

If the management data 1901 is received by the receiving part 2103, a search for the matching data "12345abcde7654" by the search part 2302 is successful and the judgment part 2103 reads the record which stores "12345abcde7654." Then, when the value of the column named "State" is read, because "valid" is stored, the matching data "12345abcde7654" is judged as valid by the judgment part 2103.

Then, the matching data "12345abcde7654" is invalidated by the invalidation part 2104. As a method for invalidation, the above stated matching data "12345abcde7654" is deleted from the table 2701. Alternatively, the value in the column named "State" of the record which is read is made a value which is different to "valid", for example, a value representing "temporarily invalidated." In this way, even if a search is performed for the matching data "12345abcde7654", it is judged as invalidated matching data.

Then, when the matching data "987654321ZXYU" is prepared by the matching data preparation part 2105, it is written to a record in the table 2701, the value in the column named "State" is changed to "valid" and the matching data "987654321ZXYU" becomes valid.

### (3. Method for receiving an electronic value file through a server)

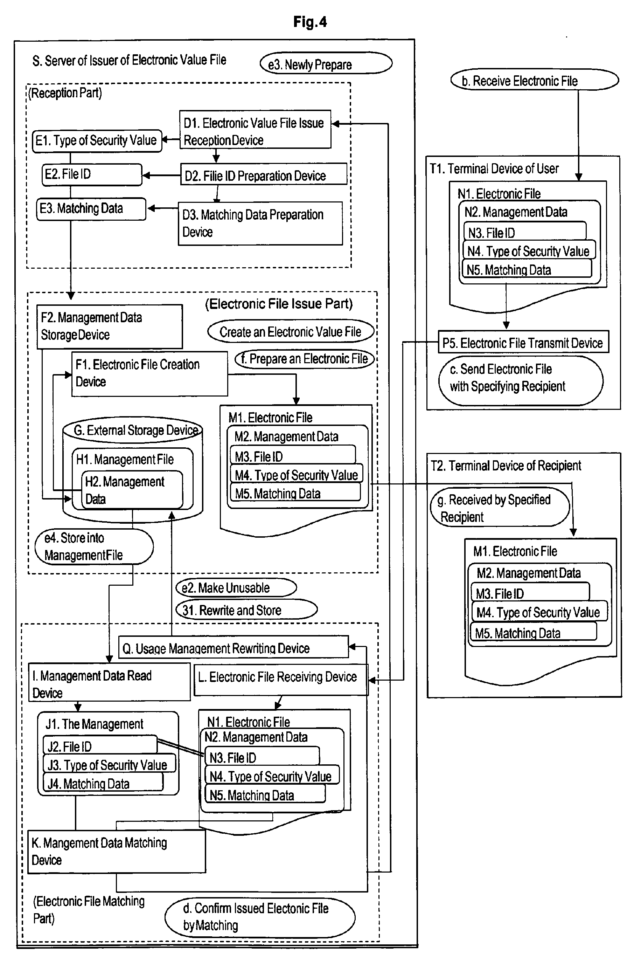

Next, a method for receiving an electronic value file through a server is explained with reference to Fig. 4.
a) At least a file ID (N3), the value of a type of security (N4) and matching data (N5) (these three are herein referred to as management data) are stored in an electronic file of an electronic value file (N1), this management data (N2=H2) is also stored as the same management data in the management file (H1) of the server (S) of the above stated electronic file issuer.

b) A user of this system receives the above stated electronic file (N 1) from the electronic value file issuer or a third party which receives an electronic file by using this system. In either case, the above stated electronic file (N1) is prepared by the server (S) of the above stated issuer. The above stated user imports the above stated electronic file (N1) into a terminal device (T1) of the user. The user can copy the electronic value file (N1) into an arbitrary storage media to provide against loss or theft.

c) The above stated user connects to the server (S) of the electronic value file issuer via a communication link using the terminal device (T1), specifies a recipient and presents the above stated electronic file (N1). An arbitrary form is possible as a method of specifying the recipient, as long as it is a method for contacting a recipient such as (method 1) email address, (method 2) a URL which includes a parameter of the server of the recipient, or (method 3) a telephone or FAX number.

d) The above stated electronic value file issuer matches the management data (N2) stored in the above stated electronic file (N1) with management data (J1) which includes the same file ID (N3) as the file ID in the above stated management data (N2) which is stored in the management file (H1) of the above stated server (S) and confirms that it is the electronic value file issued by the electronic value file issuer. For example, whether the matching data (N5) and the matching data (J4) are the same is confirmed by the management data matching device (K).

e1.) in the case where the confirmation is performed in d) above, the above stated server (S) either rewrites and stores the matching data among the management data (J1) stored in the management file (H1) of the above stated server, or e2.) makes the management data (J1) stored in the management file (H1) of the above stated server (S) unusable and issues new management data or e3) reads and prepares (management data) from (management data) which has been created and e4) stores it in the above stated management file (H1).

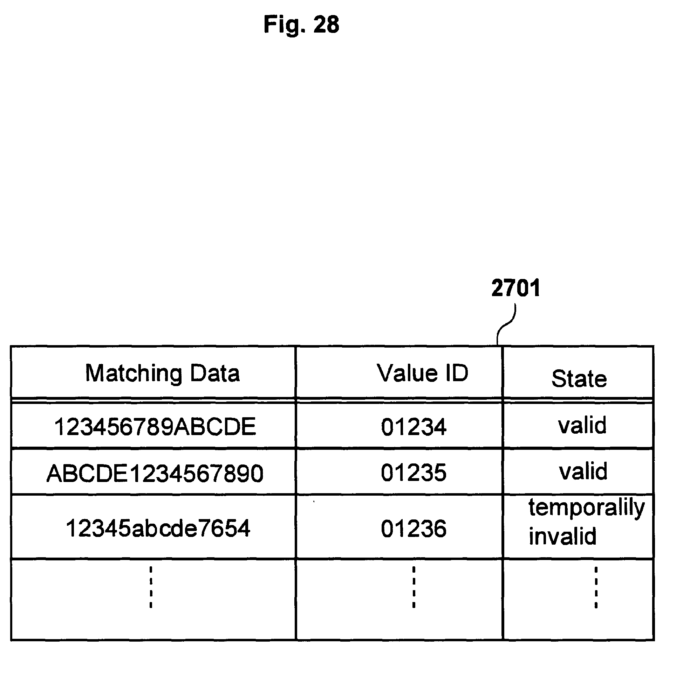

In order to make the management data (J1) unusable, (method 4) the management data is deleted from the management file (H1), or (Method 5) a flag such as "temporarily invalid" in Fig. 28 for example, is attached to the management data and managed so that it is unusable.

By the above processes, the electronic file (N1) and its copy become invalidated.

f) The above stated server (S) prepares an electronic file (M1) in which the same management data (M2) as the above stated management data which is stored in the above stated management file (H1) is stored.

g) The above stated server (S) of the above stated electronic value file issuer makes the terminal (T2) of the above stated recipient receive the electronic file (M1) prepared in f) stated above via a communication link.

Among the above stated methods (method 1), (method 2), and (method 3), (method 2) in which the server (S) of the above stated issuer can be directly accessed, the above stated server (S) connects to the server of the recipient and uploads the electronic file (M1). If an electronic mail in (method 1) is used, or a TEL or a FAX in (method 3) is used, a link to the server (S) is notified for each means, the recipient connects to the server (S) and the electronic file (M1) is downloaded from the terminal device (T2) of the recipient.

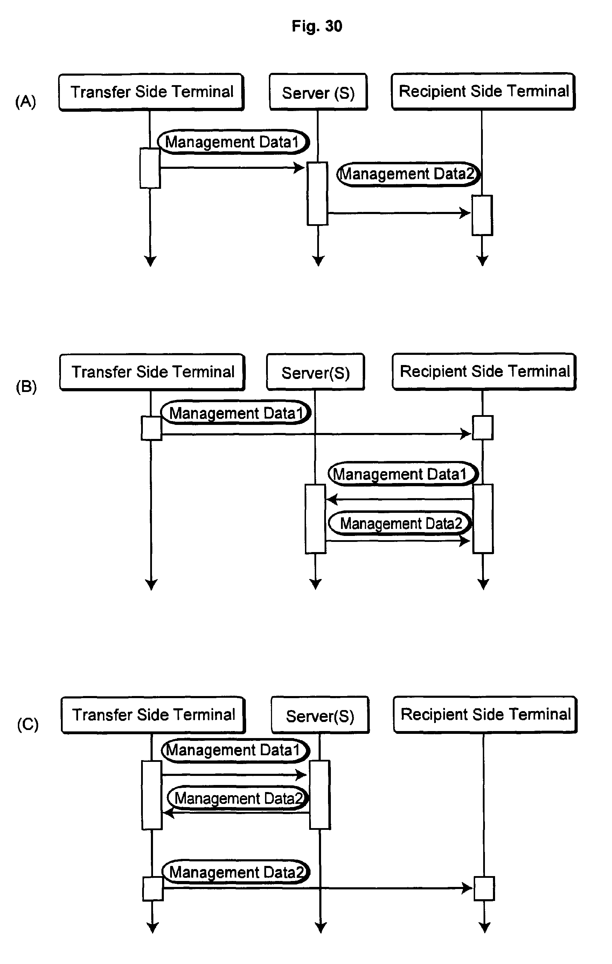

Fig. 30 (A) shows a sequence chart in the case where the electronic value file (management data) is transmitted to the recipient terminal via the server (S) from a transfer side terminal which is a terminal of the transfer side. That is, management data 1 is transmitted from the transfer side terminal to the server. At this time, an email address or an IP address which are data for specifying the recipient terminal, are also transmitted. The server judges whether the matching data included in the management data 1 is valid or not, and if it is valid, invalidates the matching data and generates new valid matching data. Then, then matching data of the management data 1 is replaced with the generated new valid matching data, management data 2 is generated and transmitted to the recipient terminal.

### (4. A method for receiving and confirming an electronic value file without passing through a server)

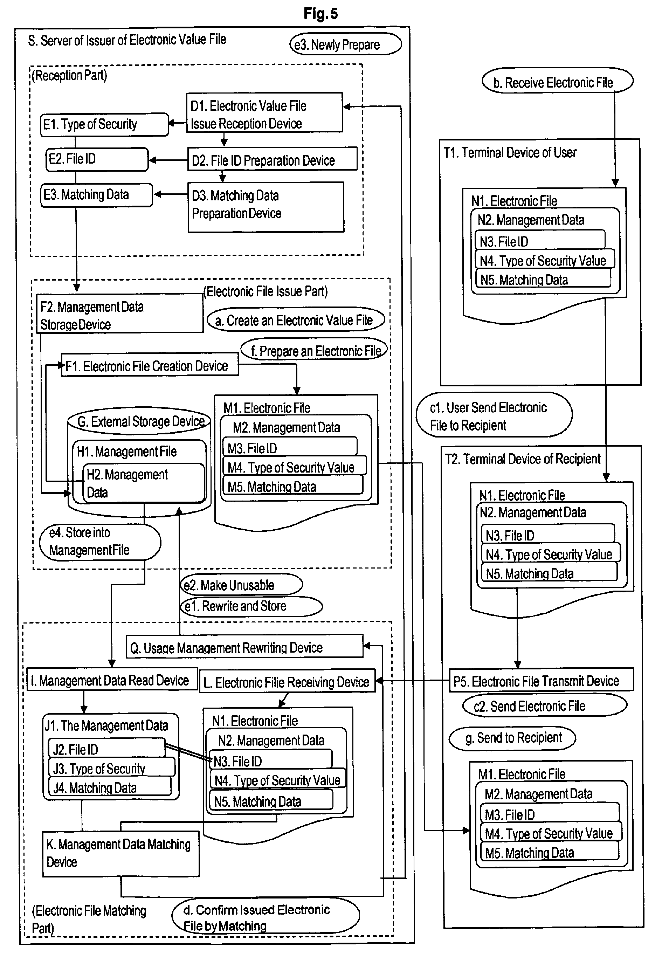

Next, a method for receiving and confirming an electronic value file without passing through a server is explained with references to Fig. 5.

a) At least a file ID (M3), a value (M4) of a type of the security in question and matching data (M5), (below these three are referred to as management data) are stored in an electronic file of the electronic value file (M1) and this management data (M2=H2) is also stored as the same management data in the management file (H1) of the server (S) of the above stated electronic file issuer.

b) A user of the present system receives the above stated electronic file (N1) from the electronic value file issuer or a third party who has received an electronic file using the present system. In whichever case, the server (S) of the above stated issuer prepares the above stated electronic file (N1). The above stated user imports the above stated electronic file (N1) into the terminal device (T1) of the user. In order to provide against loss or theft, the user can copy and store the electronic value file (N1) to an arbitrary storage media.

c1) The above stated user transmits the above stated electronic file (N1) via a communication or by transferring a media on which the electronic file (N1) is stored, to a recipient, c2) the recipient connects to the server (S) of the electronic value file issuer using a terminal device (T2) via a communication link and sends the above stated electronic file (N1). The recipient can copy and store the electronic value file (N1) to an arbitrary storage media in order to provide against loss or theft.

d) The above stated electronic value file issuer matches management data (J1) which includes the same file ID (N3) as the file ID within the above stated management data (N2) stored in the management file (H1) of the server (S) with the management data (N2) which is stored in the above stated electronic file (N1) and confirms that it is an electronic value file issued by the electronic value file issuer. For example, whether the matching data (N5) and the matching data (J4) are the same is confirmed by the management data matching device (K).

e1) In the case the confirmation in d) above is performed, the above stated server (S) either rewrites and stores the matching data among the management data (J1) stored in the management file (H1) of the above stated server (S), or makes the management data (J1) stored in the management file (H1) of the above stated server (S) unusable and issues new management data, or e3) prepares new management data or selects one from a set of management data which has been created, and stores it in the above stated management file (H1).

In order to make the management data (J1) unusable, (method 6) the management data is deleted from the management file (H1). Or (method 7) a flag can be attached to the management data and managed so that it is unusable.

By the above processes, the electronic file (N1) and its copy become invalidated.

f) The above stated server (S) of the electronic value file issuer prepares an electronic file (M1) in which the same management data (M2) as the above stated management data which is stored in the above stated management file (H1) is stored.

g) The above stated server (S) of the above stated electronic value file issuer, makes the terminal (T2) of the above specified recipient receive the electronic file (M1) prepared in f) stated above via a communication link.

Fig. 30 (B) shows a sequence chart in the case where management data is transmitted to the recipient side terminal from a transfer side terminal without passing through a server, the recipient side terminal transmits the management data to the server, and matching data is replaced. That is, the transfer side terminal transmits management data 1 and the recipient side terminal receives the management data 1 without passing through a server. For example, the management data 1 is transmitted and received using a peer to peer communication. Alternatively, the management data 1 is transmitted and received via a different server from the server (S). The recipient side terminal transmits the received management data 1 to the server (S). If the matching data which is included in the management data 1 is valid the server (S) generates new valid matching data. Then, the matching data of the management data 1 is replaced with the generated new valid matching data, management data 2 is generated and transmitted to the recipient side terminal. In Fig. 30 (B), though there is a period of time shown after the recipient side terminal receives the management data 1 and until transmitting to the server (S), in order to prevent a double transfer for the management data 1 by the transfer side terminal it is preferred that the management data 1 is transmitted to the server immediately after receiving it. In addition, because it is sufficient that the server (S) returns the replaced management data to the transmission source of the management data, the configuration of the server (S) can be made simpler.

Fig. 30 (C) shows a sequence chart of the different aspects from Fig. 30 (A) and (B) of transmission and reception. In this sequence chart, the transfer side terminal transmits management data to a server, receives management data in which matching data which has been replaced is included in the transmitted management data and transmits it to the recipient side terminal. It is suited in the case where there is a problem with the process cability of the recipient terminal. That is, the transfer side terminal transmits management data 1 to the server (S). If the matching data included in the management data 1 is valid the server (S) generates new valid matching data. Then, the matching data of the management data 1 is replaced with the generated new valid matching data, management data 2 is generated and returned to the transfer side terminal. The transfer side terminal transmits the received management data 2 to the recipient terminal. Also in Fig. 30 (C) because it is sufficient that the server (S) returns the replaced management data to the transmission source of the management data, the configuration of the server (S) can be made simpler. In addition, in the transfer side terminal, when management data is transferred it is possible to transfer the management data to the recipient side terminal after confirming its validity.

### (5. Method for dividing and receiving an electronic value file via a server)

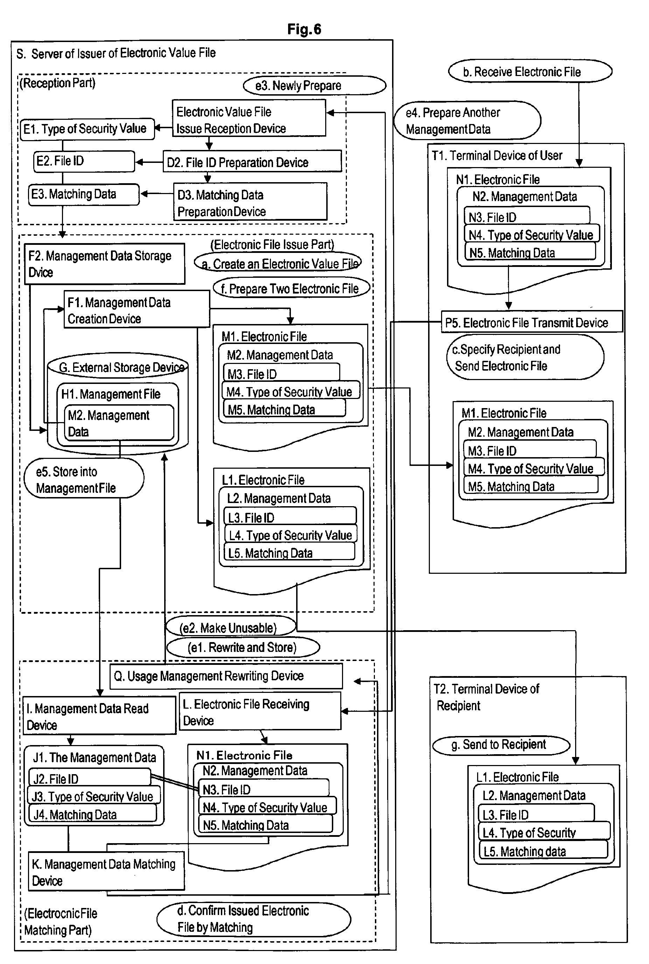

Next, a method for dividing and receiving an electronic value file via a server is explained while referring to Fig. 6.

a) At least a file ID (N3), a value (N4) of a type of the security in question and matching data (N5), (below these three are referred to as management data) are stored in an electronic file of the electronic value file (N1) and this management data (N2=H2) is also stored as the same management data in the management file (H1) of the server (S) of the above stated electronic file issuer.

b) A user of the present system receives the above stated electronic file (N1) from the electronic value file issuer or a third party who has received an electronic file using the present system. In whichever case, the server (S) of the above stated issuer prepares the above stated electronic file (N1). The above stated user imports the above stated electronic file (N1) into the terminal device (T1) of the user. In order to provide against loss or theft, the user can copy and store the electronic value file (N1) to an arbitrary storage media.

c) The above stated user connects to the server (S) of the electronic value file issuer using a terminal device (T1) via a communication link, specifies a recipient and sends the above stated electronic file (N1). As a method to specify a recipient, as long as it is a method for contacting (method 8) a recipient such as mail address, (method 9) a URL which includes the parameter for a server of the recipient, (method 10) a phone or FAX number, an arbitrary form is possible.

d) The above stated electronic value file issuer matches management data (J1) which includes the same file ID (N3) as the file ID within the above stated management data (N2) stored in the management file (H1) of the server (S) with the management data (N2) which is stored in the above stated electronic file (N1) and confirms that it is an electronic value file issued by the electronic value file issuer. For example, whether the matching data (N5) and the matching data (J4) are the same is confirmed by the management data matching device (K).

e1) In the case where the confirmation in d) above is performed, the above stated server (S) either rewrites and stores the matching data among the management data (J1) stored in the management file (H1) of the above stated server (S), or makes the management data (J1) stored in the management file (H1) of the above stated server (S) unusable and issues new management data, or e3) prepares new management data or selects one from a set of management data which has been created.

By the above processes, the electronic file (N1) and its copy become invalidated.

e4) Furthermore, in whichever case, besides the above stated rewritten or different new management data in the preparation of management data, another management data is prepared, these two management data in total are prepared and the total values of the types of securities within these two management data is made less than or equal to the value of a type of a security within the management data of the above stated electronic value file, which is received, and (e5) stored in the above stated management file (H1). For example, if a type of a security within the management data of the above stated electronic value file, which is received, is a monetary value such as 10,000 dollars, one value of one of the types of securities among the two management data is 3,000 dollars and the value of the other type of the a security is 7,000 dollars. The way in which they are divided is for example specified at the time of the transmission of the electronic value file. In addition, if the type of the security within the management data of the electronic value file which is sent represents the contents of a ticket of train A and the boarding pass of plane B, one of the types of securities among the two management data is made to represent the ticket of train A and the other type of a security is made to represent the boarding pass of plane B.

f) The above stated server (S) of the electronic value file issuer prepares two electronic files (M1, L1) in which the same management data (M2, L2) as the above stated two management data which are stored in the above stated management file (H1) is stored.

g) The above stated server (S) of the above stated electronic value file issuer, makes the terminal (T2) of the above specified recipient receive one of the electronic files (M1, L1) prepared in f) stated above via a communication link and makes the terminal (T1) of the above stated user receive the other electronic file. A more specific embodiment of the reception is stated above.

### (6. A method of dividing an electronic value file)

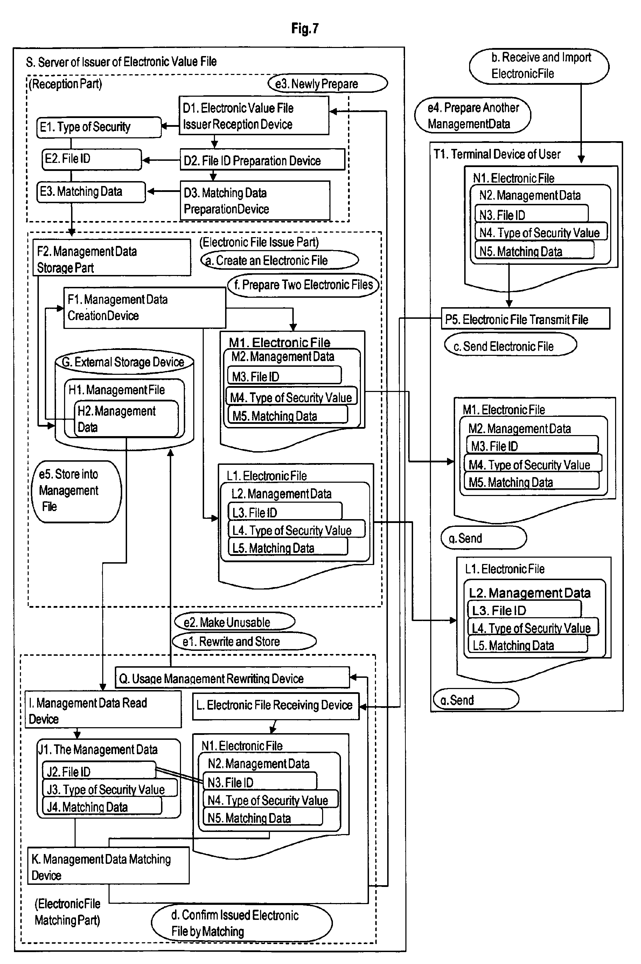

Next, a method of dividing an electronic value file is explained while referring to Fig. 7.

a) At least a file ID (N3), a value (N4) of a type of the security in question, and matching data (N5), (below these three are referred to as management data) are stored in an electronic file of the electronic value file (N1) and this management data (N2=H2) is also stored as the same management data in the management file (H1) of the server (S) of the above stated electronic file issuer.

b) A user of the present system receives the above stated electronic file (N1) from the electronic value file issuer or a third party who has received an electronic file using the present system. In whichever case, the server (S) of the above stated issuer prepares the above stated electronic file (N1). The above stated user imports the above stated electronic file (N1) into the terminal device (T1) of the user. In order to provide against loss or theft, the user can copy and store the electronic value file (N1) to an arbitrary storage media.

c) The above stated user connects to the server (S) of the electronic value file issuer using the terminal device (T1) via a communication link and sends the above stated electronic file (N1).

d) The above stated electronic value file issuer matches management data (J1) which includes the same file ID (N3) as the file ID within the above stated management data (N2) stored in the management file (H1) of the server (S) with the management data (N2) which is stored in the above stated electronic file (N1) and confirms that it is an electronic value file issued by the electronic value file issuer. For example, whether the matching data (N5) and the matching data (J4) are the same is confirmed by the management data matching device (K).

e1) In the case the confirmation in d) above is performed, the above stated server (S) either rewrites and stores the matching data among the management data (J1) stored in the management file (H1) of the above stated server (S), or e2) makes the management data (J1) stored in the management file (H1) of the above stated server (S) unusable and issues new management data e3) or prepares new management data or selects one from a set of management data which has been created.

By the above processes, the electronic file (N1) and its copy become invalidated.

e4) Furthermore, in whichever case, in addition to the above stated rewritten or prepared management data, newly prepared management data is prepared, two management data in total are prepared, and the total of the values of the types of securities within these two management data is made less than or equal to the value of a type of a security within the management data of the above stated electronic value file, which is received, and (e5) stored in the above stated management file (H1).

f) The above stated server (S) of the electronic value file issuer prepares two electronic files (M1, L1) in which the same management data (M2, L2) as the above stated two management data which are stored in the above stated management file (H1) are stored.

g) The above stated server (S) of the above stated electronic value file issuer, makes the terminal (T1) of the above specified user receive the two electronic files (M1, L1) prepared in f) stated above via a communication link.

### (7. A method of combining electronic value files)

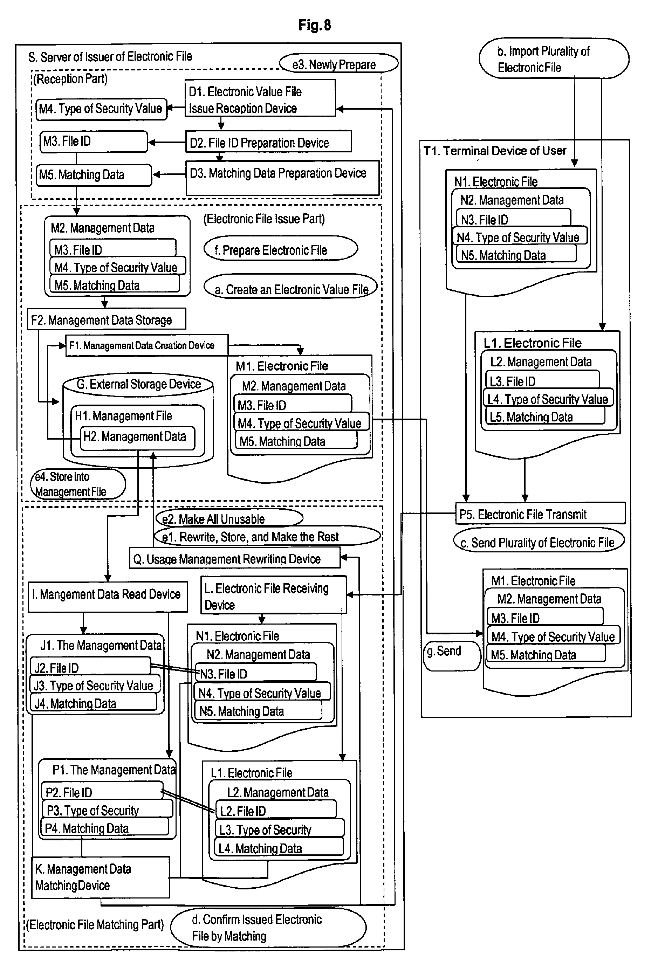

Next, a method of combining electronic value files is explained while referring to Fig. 8. While as a plurality of electronic files two electronic files N1 and L1 are the object of the explanation below, it is possible to make the same explanation with three or more electronic files.

a) At least a file ID (N3), a value (N4) of a type of the security in question, and matching data (N5), (below these three are referred to as management data) are stored in an electronic file of the electronic value file (N1) and this management data (N2=H2) is also stored as the same management data in the management file (H1) of the server (S) of the above stated electronic file issuer. The same is true of L1.

b) A user of the present system receives the above stated electronic files (N1, L1) from the electronic value file issuer or a third party who has received an electronic file using the present system. In whichever case, the server (S) of the above stated issuer has prepared the above stated electronic file (N1, L1). The above stated user imports the above stated plurality of electronic files (N1, L1) into the terminal device (T1) of the user. In order to provide against loss or theft, the user can copy and store the electronic value files (N1, L1) to an arbitrary storage media.

c) The above stated user connects to the server (S) of the electronic value file issuer using the terminal device (T1) via a communication link and sends the above stated plurality of electronic files (N1, L1)

d) The above stated electronic value file issuer matches each management data (J1, P1) which include the same file IDs (N3, L3) as the file ID within the above stated management data (N2, L2) stored in the management file (H1) of the server (S) with the management data (N2, L2) which is stored in the above stated plurality of electronic files (N1, L1) and confirms that these are the electronic values file issued by the electronic value file issuer. For example, whether the matching data (N5) and the matching data (J4) match and whether the matching data (L5) and the matching data (P4) match are confirmed by the management data matching device (K).

e1) In the case where the confirmation in d) above is performed, the above stated server (S) either rewrites and stores the matching data (J4 or P4) among one of the plurality of management data (J1 or P1) stored in the management file (H1) of the above stated server (S), and makes the remaining management data (J1 or P1) stored in the management file (H1) of the above stated server (S) unusable or e2) makes the management data (J1 and P1) stored in the management file (H1) of the above stated server (S) unusable, and issues new management data, e3) prepares a new management data or selects one from a set of management data which has been created, and stores it in the above stated management file (H1).

e4) Furthermore, the value (M4) of a type of a security within the prepared or rewritten management data (M2) is stored in the above stated management file (H1) as a total together with the values (J3 and P3) of the types of securities of the above stated plurality of management data (J1 and P1) stored in the above stated management file. In order to make the management data (J1 and/or P1) unusable, (i) the management data is deleted from the management file (H1). Or (ii) a flag is attached to the management data and managed so that it is unusable.

By the above processes, the electronic files (N1, L1) and their copies become invalidated.

f) The server (S) of the above stated electronic value file issuer prepares an electronic file (M1) in which the same management data (M2) as the management data of the value (M4) of the security of the total of the above stated values stored in the above stated management file (H1), is stored. Here, "total" means the result of a numerical addition calculation if it is a value which can be numerically added, for example, if it is a value that is expressed in yen, and if it is a value which can not be added, for example, values of different currencies, train ticket or plane boarding pass, then "total" means the result of an addition calculation as a group which includes these values as elements.

g) The server (S) of the above stated electronic value file issuer makes the terminal device (T1) of the above stated user receive the electronic file (M1) prepared in f) above via a communication link.

### (8. Method of exchanging an electronic value file for a security)

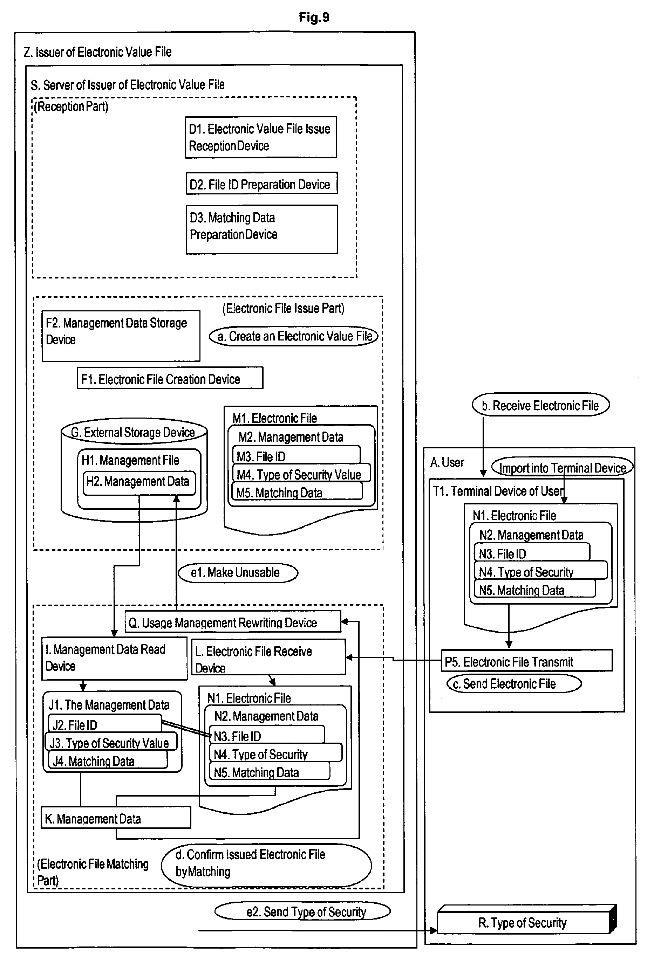

Next, a method of exchanging an electronic value file for a type of a security is explained while referring to Fig. 9.

a) At least a file ID (N3), a value (N4) of a type of the security in question, and matching data (N5), (below these three are referred to as management data) are stored in an electronic file of the electronic value file (N1) and this management data (N2=H2) is also stored as the same management data in the management file (H1) of the server (S) of the above stated electronic file issuer.

b) A user of the present system receives the above stated electronic file (N1) from the electronic value file issuer or a third party who has received an electronic file using the present system. In whichever case, the server (S) of the above stated issuer has prepared the above stated electronic file (N1). The above stated user imports the above stated electronic file (N1) into the terminal device (T1) of the user. In order to provide against loss or theft, the user can copy and store the electronic value file (N1) to an arbitrary storage media.

c) The above stated user connects to the server (S) of the electronic value file issuer using the terminal device (T1) via a communication link and sends the above stated electronic file (N1)

d) The above stated electronic value file issuer matches each management data (J1) which includes the same file ID (N3) as the file ID within the above stated management data (N2) stored in the management file (H 1) of the server (S) with the management data (N2) which is stored in the above stated electronic file (N1) and confirms that it is an electronic value file issued by the electronic value file issuer. For example, whether the matching data (N5) and the matching data (J4) match is confirmed by the management data matching device (K).

e1) In the case where the confirmation in d) above is performed, the above stated server (S) makes the management data stored in the management file (H1) unusable and e2) a type of a security (R) which has a value (J3) of a type of a security stored in the management data (J1) is given to the user (A) in c) above.

### (9. A method of moving a value between electronic value files within the same terminal device)

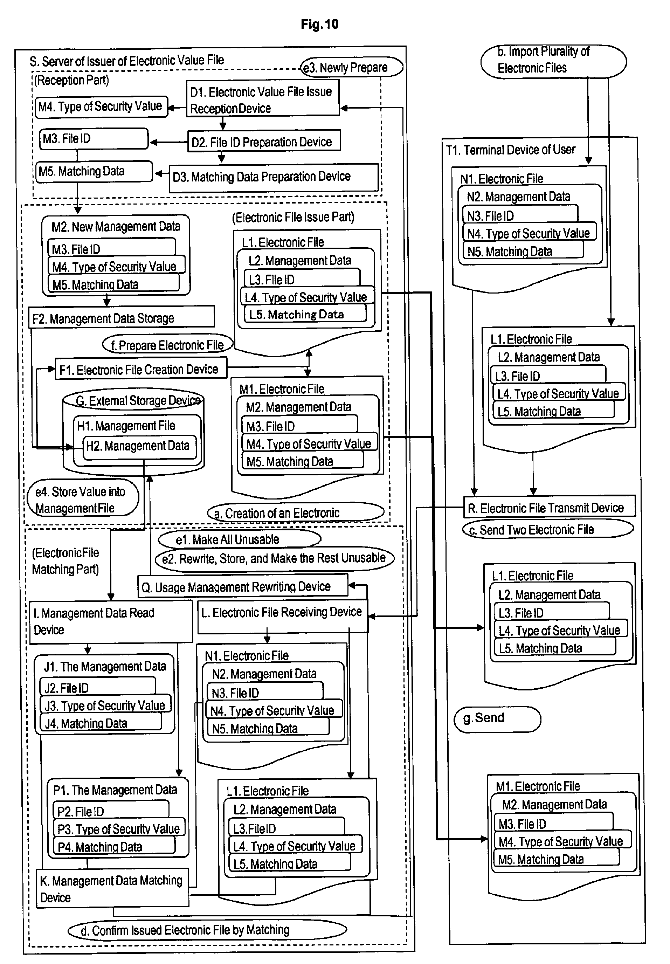

Next, a method of moving a value between electronic value files within the same terminal device while referring to Fig. 10 is explained.

a) At least a file ID (N3), a value (N4) of the security in question, and matching data (N5), (below these three are referred to as management data) are stored in an electronic file of the electronic value file (N1) and this management data (N2=H2) is also stored as the same management data in the management file (H1) of the server (S) of the above stated electronic file issuer. The same is true of L1.

b) A user of the present system receives the above stated plurality of electronic files (N1, L1) from the electronic value file issuer or a third party who has received an electronic file using the present system. In whichever case, the server (S) of the above stated issuer has prepared the above stated plurality of electronic files (N1, L1). The above stated user imports the above stated plurality of electronic files (N1, L1) into the terminal device (T1) of the user. In order to provide against loss or theft, the user can copy and store the electronic value files (N1, L1) to an arbitrary storage media.

c) The above stated user connects to the server (S) of the electronic value file issuer using the terminal device (T1) via a communication link and sends the above stated plurality of electronic files (N1, L1).

d) The above stated electronic value file issuer matches each management data (J1, P1) which include the same file IDs (N3, L3) as the file IDs within the above stated management data (N2, L2) stored in the management file (H1) of the server (S) with the management data (N2, L2) which are stored in the above stated plurality of electronic files (N1, L1) and confirms that they are electronic value files issued by the electronic value file issuer. For example, whether the matching data (N5) and the matching data (J4) match and whether the matching data (L5) and the matching data (P4) match are confirmed by the management data matching device (K).

e1) In the case where the confirmation in d) above is performed, the above stated server (S) either makes all the above stated management data (J1, P1) which are stored in the management file (H1) of the server (S) unusable, or e2) rewrites a part or all of the matching data (J4 and/or P4) within the management data, stores them and makes the management data not rewritten (J4 or P4, or none) unusable. In Fig. 8, the management data (J1) is made unusable and the management data (P1) is rewritten. e3) Except the case where all the above stated management data are rewritten, new management data is prepared, and two management data in total are prepared. In Fig. 8, two management data P1=P2 and M2 are prepared.

e4) Furthermore, the total of the values (L4, M4) of types of securities within the two rewritten or prepared management data (L2, M2) is made less than or equal to the total of the values (J3, P3) of types of securities of the two management data (J1, P1) of the electronic file sent in c) above, and stored in the above stated management file (H1).

In order to make the management data (J1 and/or P1) unusable, (i) the management data is deleted from the management file (H1). Or (ii) a flag is attached to the management data and managed so that it is unusable.

By the above processes, the electronic files (N1, L1) and their copies become invalidated.

f) The server (S) of the above stated electronic value file issuer prepares two electronic files (L1, M1) in which the same management data (M2) as the above stated two management data stored in the above stated management file (H1), is stored.

g) The server (S) of the above stated electronic value file issuer makes the terminal device (T1) of the above stated user receive the two electronic files (L1, M1) prepared in f) above via a communication link.

In the above description, two management data are sent, and a change is performed to reduce all of the values (V1) which are correlated with one of these management data (for example, L1), and a change is performed to increase all of the values (V2) which are correlated with the other of these management data (for example, M1). Here, the amount of reduction of V1 is equal to the amount of increase of V2. Of course, it is not necessary to reduce all of V1. In addition, it is not necessary for all of the reduced amount of V1 to be equal to the increased amount of V2.

In addition, in the case where a value after a reduction of V1 is less than or equal to a predetermined value, L1 is discarded and T1 is not transmitted to. For example, in the case where all of the value of V1 is reduced and its value disappears, V1 is discarded and L1 is not sent to the terminal of the user.

In addition, while the move of a value between two management data is explained in the description above, an explanation can similarly be made for a move of a value between three or more management data. For example, in the case where three management data are sent to the server (S), one part of the management data, for example, one of the three management data is selected, a change is performed to reduce the value correlated with that management data, and a value correlated with one of both of the remaining management data can be increased by an amount below the reduced amount. As stated above, in the case where a value becomes a value less than a predetermined value by a change for reducing, the value which is correlated with the value in which the change for reducing is performed is discarded and not sent to the terminal of the user.

### (10. A method for moving a value between electronic value files in different terminals)

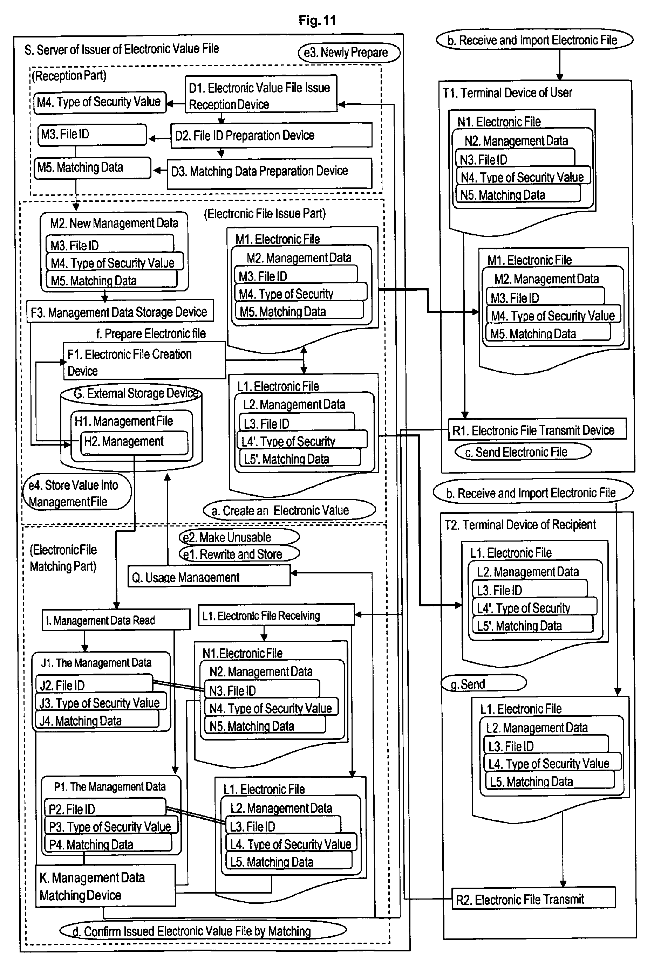

Next, a method for moving a value between electronic value files in different terminals is explained while referring to Fig. 11.

a) At least a file ID (N3), a value (N4) of a type of the security in question, and matching data (N5), (below these three are referred to as management data) are stored in an electronic file of the electronic value file (N1) and this management data (N2=H2) is also stored as the same management data in the management file (H1) of the server (S) of the above stated electronic file issuer. The same is also true for L1.

b) A user of the present system and a recipient each respectively receive the above stated electronic files (N1, L1) from the electronic value file issuer or a third party who has received an electronic file using the present system. In whichever case, the server (S) of the above stated issuer has prepared the above stated electronic files (N1, L1). The above stated user and recipient import the above stated electronic files (N1, L1) into their respective terminal devices (T1, T2). In order to provide against loss or theft, the user and recipient can copy and store the electronic value files (N1, L1) to an arbitrary storage media.

c) The above stated user and recipient connect to the server (S) of the electronic value file issuer using their respective terminal devices (T1, T2) via communication links and send each of the above stated electronic files (N1, L1) received in b) above.

d) The above stated electronic value file issuer matches each management data (J1, P1) which include the same file IDs (N3, L3) as the file IDs within the above stated management data (N2, L2) stored in the management file (H1) of the server (S) with the management data (N2, L2) which are stored in the above stated electronic files (N1, L1) and confirms that they are electronic value files issued by the electronic value file issuer. For example, whether the matching data (N5) and the matching data (J4) match is confirmed by the management data matching device (K).

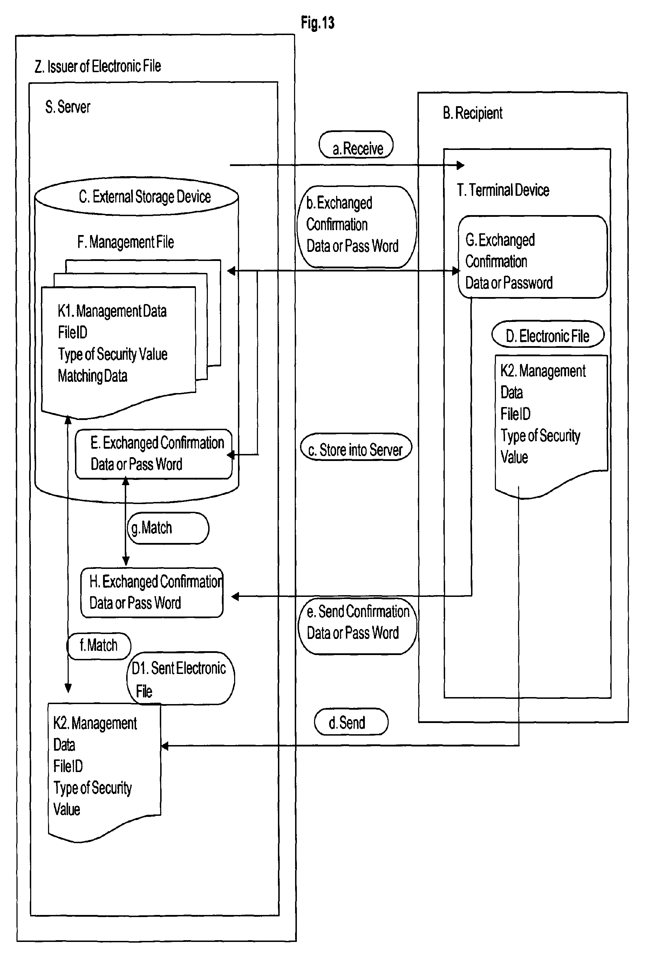

e1) In the case where the confirmation in d) above is performed, the above stated server (S) either rewrites and stores the matching data among the management data (J1 and/or P1) stored in the management file (H1) of the above stated server (S), or e2) makes the management data (J1 and/or P1) stored in the management file (H1) of the server (S) unusable, and e3) issues new management data (M2) or prepares management data by selecting one from a set of management data which has been created. In Fig. 13, the management data J1 is made unusable, new management data M2 is prepared and the management data P1 is rewritten.

e4) Furthermore, the total of the values (P3, M4) of types of securities within the two prepared management data (P1, M2) is made less than or equal to the total of the values (J3, N4) of types of securities of the two management data (J1, N1) of the electronic file sent by the above stated user and recipient, and stored in the above stated management file (H1).

By the above processes, the electronic file (N1) and its copies become invalidated.

f) The server (S) of the above stated electronic value file issuer prepares two electronic files (L1, M1) in which the same management data (M2, L2) as above stated the two management data stored in the above stated management file (H1), is stored.

g) The server (S) of the above stated electronic value file issuer makes the terminal devices (T1, T2) of the above stated user and recipient receive the one each of two electronic files (M1, L1) prepared in f) above via communication links.

A more specific embodiment of reception is stated above.

### (10. Theft prevention by encryption)

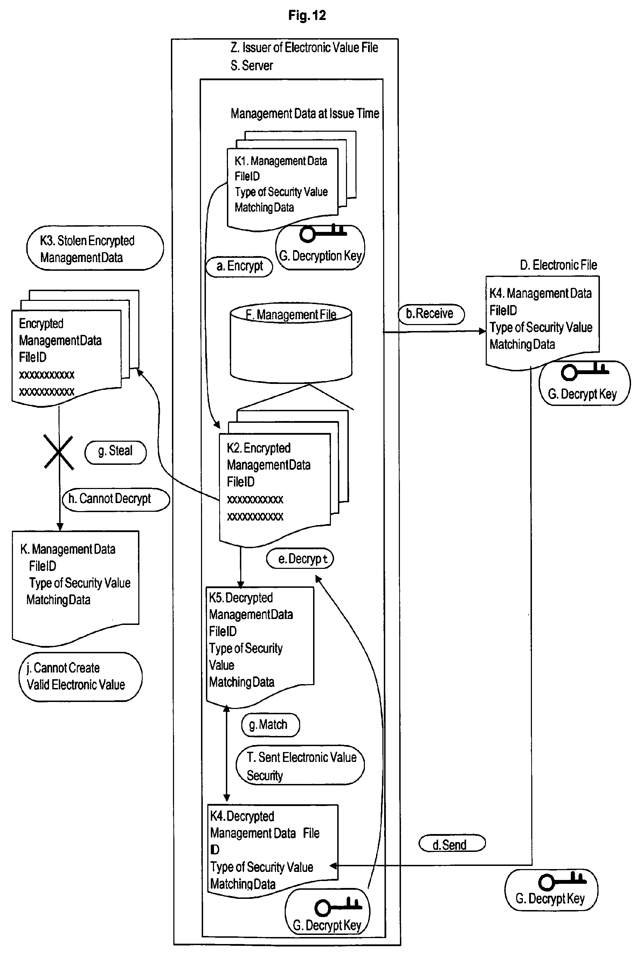

Next, a theft prevention method by encryption is explained while referring to Fig. 12.

In this part, an embodiment in which an encryption of at least matching data among a file ID of management data (K1), value of a type of a security, and matching data stored in the management file (F) of the issuer (Z) of electronic value files is performed and, the decryption key (G) is attached to an electronic file (D) and transmitted to the terminal of a user and received by a user, is explained. In order to make the effects of the present invention complete, the decryption key (G) should not be stored within the server of the issuer of electronic value files, and of course should not be stored in the above stated issuer side. Then, every time the process for encrypting at least the matching data is to be performed, an encryption key is generated and at least the matching data should be encrypted with this encryption key and stored in the management file (F). The above stated decryption key (G) is a key which decrypts the encryption by the generated encryption key.

a) When management data (K1) is stored in the management file (F) of the issuer (Z) of electronic value files, at least the matching data among the management data is encrypted and the encrypted management data (K2) is stored. At this time, an encryption key should be generated each time and at least the matching data should be encrypted with the generated encryption key and stored.

b) The issuer (Z) of electronic value files makes a user receive a decryption key (G) and the same electronic value file (D) in the prepared electronic value file (K1). The decryption key (G) may be received by user at the same time as the electronic value file (D) or at a different time. In addition, the path which the user receives the decryption key (G) and the electronic value file (D) may be the same or it may be different. In the case where the path is different, for example, the electronic value file (D) may be transmitted by electronic mail and the encryption key (G) may be sent by facsimile.

In the case where an encryption key is generated every time, the decryption key (G) here is a decryption key which corresponds to the generated encryption key. As a process of encryption, in the case of using a symmetric-key cryptography, the encryption key and the decryption key are the same. In the case of using a public key encryption, the encryption key is a secret key, for example, and the decryption key is a public key.

d) The user sends a decryption key (G) and an electronic value file (D) to the server (S) of the issuer of the electronic value file. The decryption key (G) and the electronic value file (D) may be sent simultaneously or at different times. In addition, the routes of sending them may be the same or different.

e) The issuer of the electronic value file uses the decryption key (G) which is attached to the electronic file (T), which has been sent, and decrypts at least the management data (K2) in which matching data is encrypted. The management data (K2) is data which is obtained by a search to the management data file (F) for management data which includes the same file ID as the file ID of the displayed electronic file (T). Therefore, in this paragraph, a file ID is included in the management data, and the file ID which is included in the management file stored in the management file (F) of the server (S) is in plain format or in encrypted format using a key in which the server can be accessed.

f) the management data (K5) which is stored in the management file (F) of the electronic value file of the issuer (Z) decrypted in e) above, and the management data (K4) of the electronic value file (T) and sent to the electronic value file issuer (Z) in d) above, are matched and confirmed whether they are the electronic value files issued by the electronic value file issuer. That is, it is confirmed whether the electronic value file, which has been decrypted, and the electronic value file, which has been sent, are the same. Confirmation is performed, for example, when the management data are the same.

g) Even if the management data stored in the management data file (F) of the electronic value file issuer (Z) is leaked externally by intention, theft, or due to negligence, because at least the matching data of the management data is encrypted, a valid electronic value file can not be created. Particularly, by encrypting matching data by generating an encryption key each time matching data is encrypted, it becomes increasingly difficult to create a valid electronic value file. Here, while a comparison is made of decrypting encrypted data, the same effects can be obtained even when a comparison is made without decryption.

### (11. Improving safety of an electronic value file by confirmation data or a password)

Next, the effects of increased safety of an electronic value file in the case where confirmation data or a password is exchanged between the issuer of an electronic value file and a recipient is explained while referring to Fig. 13.

a) When an electronic file is received form the server (S) of the issuer of an electronic value file (D), b) the server (S) of the issuer (Z) of an electronic value file exchanges confirmation data or a password (G) with the recipient (B) of the electronic file (D) and c) stores that confirmation data or password (G) in the server (S) of the issuer with the file ID of the management data (K1), and d) when the above stated recipient (B) sends the above stated electronic value file to the server (S) of the above stated issuer using the terminal device (T), e) the above stated confirmation data or password (G) is sent, and f) when it is confirmed that it is the electronic value file issued by the above stated issuer, g) the confirmation data or password (G) too is compared to see if it matches that stored in the server (S) of the above stated issuer, and in the case where the above stated confirmation data or password (G) matches, it is confirmed as the electronic value file issued by the above stated issuer (Z).

Although the user stores the password and inputs it in each time like a bank card, because the exchange data is stored as data in electronic media and thus processed by a terminal, the data can be longer than the range of which a person can operate or remember. Even in the case where the password or confirmation data is stolen or lost, it can not be used by a person who obtains it. However, a valid user can use it from a copy. In this way it is possible to increase the safety of an electronic value file.

### (11. Specification of a recipient by a recipient ID)

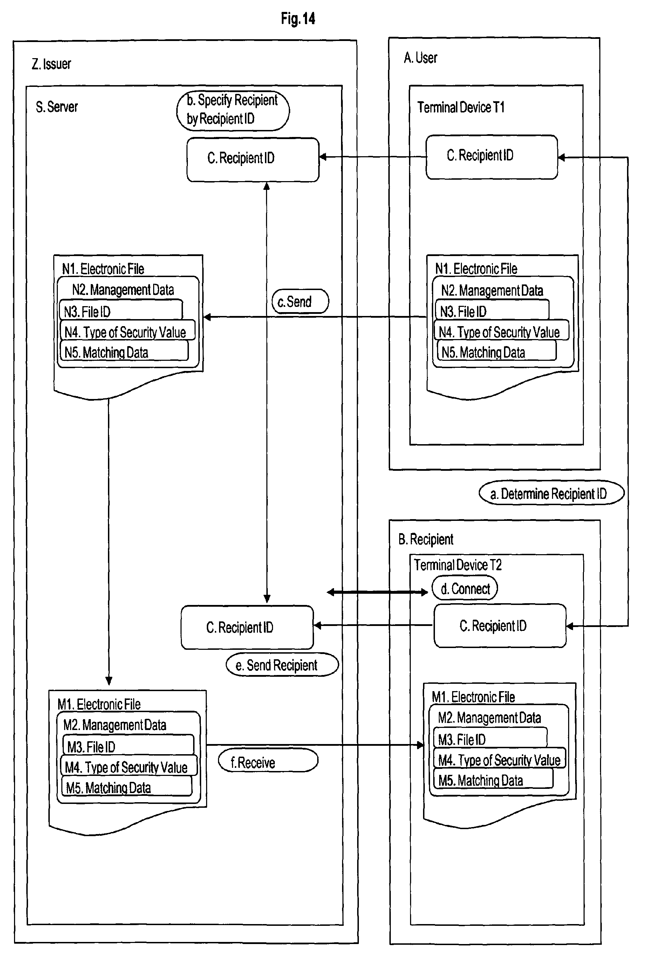

Next, a method for specifying a recipient by a recipient ID is explained while referring to Fig. 14.

Before sending the electronic file in e) below, a) in advance, a user (A) and a recipient (B) of an electronic value file connect via a communication link using a terminal device and the user (A) and recipient (B) determine a recipient ID (C). b) The user specifies the recipient by specifying the recipient ID (C), c) sends an electronic file (N1), d) the recipient (B) connects to the server (S) of the issuer via a communication link using a terminal device (T1, T2), e) and sends the recipient ID (C). f) The server (S) of the issuer (Z) transmits the prepared electronic file (M1) to the recipient (B) who sends the recipient ID (C) specified by the user (A).

There is a case of a usage method which can be supposed in which a user (A) accesses the WWW server of a recipient (B) and wishes to transfer a type of a security to the recipient (B) via a certain site. In this way, the user (A) and the recipient (B) are usually connected in advance via a communication link. Because the operation of the present system begins after this, first, both parties decide a recipient ID (C), both parties connect to the server (S) of the issuer and then the present system is used.

In order for the user (A) and the recipient (B) to determine a recipient ID (C), a sufficiently long random number is issued by a CGI, for example, in the WWW server of the recipient, and may be downloaded via the user's browser. At this time, it is preferable for security reasons that the HTTPS protocol be used. After this, a wallet software is used as a browser plugin and after that the processing of sending the electronic file (M1) is performed.

Common embodiments from (3. a method for receiving an electronic value file via a server) to (9. a method for shifting a vale between electronic value files).

a) At least a file ID, a value of the security in question, and matching data, (below these three are referred to as management data) are stored in an electronic file of an electronic value file and this management data is also stored in the management file of the server of the above stated electronic file issuer. An image (preferably including a monetary figure) is visually displayed by a terminal device and it is possible to make alteration difficult by inserting a digital watermark for example in the electronic file. Although because the value of a type of a security is stored in the electronic file, it is not secured when offline, a balance can be confirmed in many cases. In addition, because the value of a type of a security is stored not only in an electronic file but also in a server, the above stated value of the electronic file can not be altered.

b) A user of the present system receives the electronic file stated above in a) from the electronic value file issuer or a third party who has received the electronic file using the present system. In order to receive the electronic file, the file may be attached to an online mail or by connecting to the server of the electronic value file issuer or a third party, inserting a password if necessary and downloading. Media in which the electronic file is stored is received offline.

c) The above stated user connected to the server of the electronic value file issuer via a communication link using a terminal device, specifies a recipient and sends the electronic file. It is possible to send by simply uploading the file using the server of the electronic value file as a WWW server. In order to realize a secure environment, the HTTPS protocol may be used. Considering ease of handling and level of widespread use, a dedicated wallet software which is arranged with a function such as FTP may be required. A series of processes is performed within this program. In addition, when it is a dedicated software, the server can connect between the dedicated software on both sides using a communication link, it becomes possible to freely select a protocol or develop a new protocol and it is possible to make a sufficiently considered design in terms of use and security.

d) The server of the above stated electronic file issuer matches the management data stored in the above stated electronic file with the management data stored in the management file of the above stated server and confirms that it is an electronic value file issued by the electronic value file issuer.

e) In the case where the confirmation in d) is performed, the server rewrites and stores the matching data within the management data which is stored in the management file of the server, or the management data stored in the management file of the server is made unusable and new management data is issued, or data is selected from already created data and prepared and stored in the management file.

Even in the case where the value of a type of a security is not rewritten, because the matching data is rewritten, in the case of theft or loss the value can be protected by rewriting the matching data as soon as possible. Even against skimming which copies data illegally, because the skimmer must use the data before the person being skimmed, skimming becomes difficult. In addition, the person being skimmed can quickly realize they are being skimmed because they will no longer be able to use the electronic value file in his turn.

In this situation, if large amounts of skimming is performed, the skimmer must use the data before the person being skimmed, and the person being skimmed easily notices that he has been skimmed. In addition, for example, in the case where a request is made other than from a terminal (such as a shop where a large amount of data is not unusual) in which a large amount of electronic value files received offline (skimming is offline) can be known, then the possibility of skimming or illegality is high.

f) The server of the electronic value file issuer prepares an electronic file in which the same management data as the management data stored in the management file is stored. Originally, it is necessary to build the server side software using special software. These can be easily built by using an SQL database as a management file, storing the necessary data and making a key from a file ID.

g) The server of the electronic value file issuer transmits the prepared electronic file to the terminal of the user via a communication link. Because the user is the interested party connected using a terminal, the connection is maintained, and the user is made to wait and download the prepared electronic file. Realizing using dedicated wallet software having a function such as FTP stated above in c) is also good in terms of usage and security.

The following systems are provided as some embodiments of the present invention by summarizing the above.

A first system for transferring a type of a security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives the electronic file stated in a) from the issuer of the electronic value file or a third party who has received the electronic file using the present system.
c) The user connects to the server of the issuer of the electronic value file via a communication link using a terminal device, specifies a recipient and sends the electronic file.
d) The server of the electronic value file issuer matches the management data stored in the electronic file with the management data stored in the management file of the server, and confirms that it is an electronic value file issued by the electronic value file issuer.
e) In the case of confirmation stated in d) the server rewrites and stores the matching data within the management data stored in the management file of the server, or makes the management data stored in the management file of the server unusable, prepares new management data and stores it in the management file.
f) The server of the electronic value file issuer prepares an electronic file in which the same management data as the management data stored in the management file is stored.
g) The server of the electronic value file issuer transmits the electronic file prepared as stated in f) to the terminal device of the recipient via a communication link.

A second system for transferring a type of the security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives the electronic file stated in a) from the issuer of the electronic value file or a third party who has received the electronic file using the present system.
c) The user transmits the electronic file to the recipient and the recipient connects to the server of the issuer of the electronic value file via a communication link using a terminal device and sends the electronic file.
d) The electronic value file issuer matches the management data stored in the electronic file with the management data stored in the management file of the server, and confirms that it is an electronic value file issued by the electronic value file issuer.
e) In the case of the confirmation stated in d) is performed, the server rewrites and stores the matching data within the management data stored in the management file of the server, or makes the management data stored in the management file of the server unusable, prepares new management data and stores it in the management file.
f) The server of the electronic value file issuer prepares an electronic file in which the same management data as the management data stored in the management file is stored.
g) The server of the electronic value file issuer transmits the electronic file prepared as stated in f) to the terminal device of the recipient via a communication link.

A third system for transferring a type of a security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives the electronic file stated in a) from the issuer of the electronic value file or a third party who has received the electronic file using the present system.
c) The user transmits the electronic file to the recipient and the recipient connects to the server of the issuer of the electronic value file via a communication link using a terminal device and sends the electronic file.
d) The electronic value file issuer matches the management data stored in the electronic file with the management data stored in the management file of the server, and confirms that it is an electronic value file issued by the electronic value file issuer.
e) In the case of the confirmation stated in d) is performed, the server rewrites and stores the matching data within the management data stored in the management file of the server, or makes the management data stored in the management file of the server unusable, prepares new management data and stores it in the management file. Furthermore, in either case, this rewriting or different new management data to the prepared management data is prepared and together two management data are prepared and the total of the values of the securities within these two management data is made less than the value of a type of a security within the management data of the above stated sent electronic value file and stored in the above stated management file.
f) The server of the electronic value file issuer prepares two electronic files in which the same management data as the two management data stored in the management file are stored.
g) The server of the electronic value file issuer transmits one electronic file among the two electronic files prepared as stated in f) to the terminal device of a specified recipient and transmits the other electronic file to the terminal device of the user.

A fourth system for transferring a type of a security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives the electronic file stated in a) from the issuer of the electronic value file or a third party who has received the electronic file using the present system.
c) The user connects to the server of the issuer of the electronic value file via a communication link using a terminal device and displays the electronic file.
d) The electronic value file issuer matches the management data stored in the electronic file with the management data stored in the management file of the server, and confirms that it is an electronic value file issued by the electronic value file issuer.
e) In the case of the confirmation stated in d) is perfomed, the server rewrites and stores the matching data within the management data stored in the management file of the server, or makes the management data stored in the management file of the server unusable, prepares new management data and stores it in the management file. Furthermore, in either case, this rewriting or different new management data to the prepared management data is prepared and together two management data are prepared and the total of the values of the securities within these two management data is made less than or equal to the value of a type of a security within the management data of the above stated sent electronic file and stored in the above stated management file.
f) The server of the electronic value file issuer prepares two electronic files in which the same management data as the two management data stored in the management file are stored.
g) The server of the electronic value file transmits the prepared two electronic files to the terminal device of the user via a communication link.

A fifth system for transferring a type of a security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives a plurality of the electronic files stated in a) from the issuer of the electronic value file or a third party who has received the electronic file using the present system.
c) The user connects to the server of the issuer of the electronic value file via a communication link using a terminal device and sends the plurality of electronic files.
d) The electronic value file issuer respectively matches the management data stored in the plurality of electronic files with the plurality of management data stored in the management file of the server, and confirms that they are electronic files issued by the electronic value file issuer.
e) In the case of the confirmation stated in d) is perfomed, the server rewrites and stores the matching data within either one of the plurality of management data stored in the management file of the server, and makes the management data stored in the remaining management file of the server unusable, or makes all of the plurality of management data stored in the management file of the server unusable, and prepares new management data. Furthermore, the value of a type of a security within the rewritten or prepared management data is made less than the total of the value of a security of the plurality of management data stored in the management file, and is stored in the management file.
f) The server of the electronic value file issuer prepares an electronic file in which the same management data as the rewritten or newly prepared management data stored in the management file are stored.
g) The server of the electronic value file transmits the prepared electronic file to the terminal device of the user via a communication link.

A sixth system for transferring a type of a security by an electronic value file comprising from a to e stated below:
a) At least a file ID, value of a type of the security in question, and matching data (these three are referred to as management data below) are stored in an electronic value file and this data is also stored in the management file of the server of the issuer of the electronic value file.
b) A user of the present system receives the electronic file stated in a) from the issuer of the electronic value file or a third party who has received the electronic file using the present system.
c) The user connects to the server of the issuer of the electronic value file via a communication link using a terminal device and sends the electronic file.
d) The electronic value file issuer matches the management data stored in the electronic file with the management data stored in the management file of the server, and confirms that it is an electronic value file issued by the electronic value file issuer.
e) In the case of the confirmation stated in d) is performed, the server makes the management data stored in the management file of the server unusable, and the issuer of the electronic value file transmits the type of the security which has the value of the type of the security stored in the management data to the user stated in c).

A seventh system for transferring a type of the security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user of the present system receives two electronic files stated in a) from the issuer of the electronic value file or a third party who has received the electronic file using the present system.
c) The user connects to the server of the issuer of the electronic value file via a communication link using a terminal device and sends the two electronic files.
d) The electronic value file issuer respectively matches the management data stored in the plurality of electronic files with the two management data stored in the management file of the server, and confirms that they are electronic value files issued by the electronic value file issuer.
e) In the case of the confirmation stated in d) is performed, the server makes all the above stated management data, which are stored in the management file of the server, unusable, or rewrites and stores matching data within a part or all of management data and makes the management data which is not rewritten unusable. Except the case where all the above stated management data is rewritten, new management data is prepared and a total of two management data is prepared. Furthermore, the total of the value of a type of a security within the two rewritten or prepared management data is made a value less than the total of the values of types of securities of the two management data stored in the management file, and is stored in the management file.
f) The server of the electronic value file issuer prepares two electronic files in which the same management data as the two prepared management data stored in the management file are stored.
g) The server of the electronic value file transmits the prepared two electronic files to the terminal device of the user via a communication link.

An eighth system for transferring a type of a security by an electronic value file comprising from a to g stated below:
a) At least a file ID, value of a type of the security in question, and matching data (these three are referred to as management data below) are stored in an electronic value file and this data is also stored in the management file of the server of the issuer of the electronic value file.
b) A user and recipient of the present system each receive the electronic file in stated a) from the issuer of the electronic value file or a third party who has received the electronic file using the present system.
c) The user and recipient connect to the server of the issuer of the electronic value file via a communication link using a terminal device and send the respective electronic files. At this time the user specifies the recipient.
d) The electronic value file issuer matches the management data stored in the electronic files with the management data stored in the management file of the server, and confirms that they are electronic value files issued by the electronic value file issuer.
e) In the case of the confirmation stated in d) is performed, the server rewrites and stores matching data within the management data stored in the management file of the server, makes the management data stored in the management file of the server unusable and prepares new management data. Furthermore, the total of the value of types of securities within the two rewritten or prepared management data is made a value less than the total of the values of types of securities of the two management data stored in the management file sent by the user and the recipient, and is stored in the management file.
f) The server of the electronic value file issuer prepares two electronic files in which the same management data as the two rewritten or prepared management data stored in the management file are stored.
g) The server of the electronic value file transmits each of the prepared two electronic files to each terminal device of each user via a communication link.

In addition, in the step stated in a) in one of the first to the fifth systems, among the management data file ID, value of a type of a security and matching data which are stored in the management file of the electronic value file issuer, it is possible to encrypt at least the management data and attach the decryption key to an electronic file.

In addition, in the step stated in g) in one of the first to the fifth systems, when an electronic file is transmitted, confirmation data or a password is exchanged between the server of the electronic value file issuer and the recipient of the electronic file, the confirmation data or password is stored in the server of the issuer with the management data file ID, and in the step in c) when the recipient sends the electronic file to the server of the issuer using a terminal device, the confirmation data or password is sent, and in the step in d) when the server of the issuer confirms that it is an electronic value file issued by the issuer, the confirmation data or password is checked to see if it matches that stored in the server of the issuer and in the case where the confirmation data or password match, it may be confirmed that it is an electronic value file issued by the issuer.

In addition, in the step in c) in one of the first, the third, and the eighth systems, in advance the user and the recipient of an electronic value file connect via a communication link using a terminal device and a recipient ID is decided between the user and the recipient. In the step in c) the user specifies a recipient by specifying the recipient ID and sends an electronic file, and the recipient connects to the server of the issuer via a communication link using a terminal device and displays the recipient ID. In addition, in the step in g) the server of the issuer may transmit the prepared electronic file to the recipient who has sent the recipient ID specified by the user.

In addition, as a first method, a data transmitting and receiving method is proposed in which a server device receives management data transmitted from a terminal, and includes matching data in which a judgment of validity is performed, the server device performs a judgment of whether the matching data included in the received management data is valid or not, and the server device invalidates the matching data if the judgment result is that the matching data is valid, prepares new matching data, replaces the invalidated matching data which is included in the management data with the prepared new valid matching data and the replaced management data which is obtained is transmitted to the terminal of a different terminal to the terminal.

As a second method, a data transmitting and receiving method is proposed in which the server device in the first method includes a memory part which stores valid matching data, and the matching data is judged whether it is valid or not by a judgment of whether or not the matching data which is included in the received matching data is stored in the memory part.

As a third method, a data transmitting and receiving method is proposed in which the server device in the second method generates an encryption key when preparing new valid matching data, encrypts the new valid matching data with the encryption key and stores the new valid matching data in the memory part, and transmits the generated encryption key when transmitting the replaced management data.

As a fourth method, a data transmitting and receiving method is proposed in which the matching data in the second method is invalidated by deleting the matching data from the memory part.

As a fifth method, a data transmitting and receiving method is proposed in which the memory part in the second method correlates and stores attribute data which shows that invalid matching data is invalid, and the matching data is invalidated by correlating and storing attribute data which shows that the matching data is invalid.

As a sixth method, a data transmitting and receiving method is proposed in which, in the second method, identification data of the management data is included in the management data which is received by a server device, the memory part encrypts the matching data, correlates and stores identification data of the management data which includes the matching data, the server device receives a decryption key when receiving the management data, reads the encrypted matching data which is stored in the memory part and which is correlated with the received management data identifier, decrypts the encrypted matching data using the received decryption key and judges whether the matching data included in the received management data is valid or not.

As a seventh method, a data transmitting and receiving method is proposed in which the management data transmitted from the terminal in the first method, is received together with identification data of a terminal which becomes the transmission recipient of the replaced management data.

As an eighth method, a data transmitting and receiving method is proposed in which the management data transmitted from the terminal in the first method, is management data which is transmitted to the terminal from a different terminal to the terminal.

As a ninth method, a data transmitting and receiving method is proposed in which the management data in the first method, is correlated with a dividable value, and if the matching data is judged to be valid, the value which is correlated with the management data is divided, new management data is generated and one part of the divided value is correlated with the new management data and the other part of the divided value is correlated with replaced management data.

As a tenth method, a data transmitting and receiving method is proposed in which the new management data or the replaced management data in the ninth method, is transmitted to the terminal.

As an eleventh method, a data transmitting and receiving method is proposed in which the management data in the first method, is correlated with a value, the server device receives a plurality of management data, if each of the matching data of the plurality of management data is judged to be valid, a change is performed which reduces the value which is correlated with one part of the management data of the plurality of management data, and a change is performed which increases the value which is correlated with the other part of the management data, and the total of the values after changing does not exceed a total of the values before changing.

As a twelfth method, a data transmitting and receiving method is proposed in which the server device in the eleventh method discards the management data which is correlated with the value which is below a predetermined value as a result of decreasing the value.

As a thirteenth method, a data transmitting and receiving method is proposed in which the server device in any one of the methods from the first to twelfth methods, transmits a password along with the management data, judges whether the password is valid, and if the password is valid judges whether the matching data is valid.

As a fourteenth method, a data transmitting and receiving method is proposed in which the replaced management data in any one of the methods from the first to twelfth methods, is correlated with an ID of a recipient, the server device accumulates the replaced management data until the terminal which is occupied by the recipient who is shown by the recipient ID, connects to the server.

## Claims

1. A data transmitting and receiving method comprising:
receiving, by a server device, management data which is transmitted from a terminal and which includes matching data for making a judgment of validity;
judging by the server device whether or not the matching data which is included in the received management data is valid, and;
in the case of the result of the judgment is that the matching data is valid, transmitting from the server device to the terminal or a different terminal to the terminal a replaced management data, the replaced management data being obtained by invalidating the matching data and by replacing the invalidated matching data in the matching data with a prepared new valid matching data.

2. The data transmitting and receiving method according to claim 1, wherein the server device includes a memory part which stores valid matching data, and a judgment of the validity of the matching data is made by judging whether the matching data which is included in the received management data is stored in the memory part.

3. The data transmitting and receiving method according to claim 2, wherein the matching data is invalidated by deleting the matching data from the memory part.

4. The data transmitting and receiving method according to claim 2, wherein the memory part correlates attribute data which indicates that invalid matching data is invalid and stores the attribute data, and the matching data is invalidated by correlating and storing attribute data which indicates the matching data is invalid.

5. The data transmitting and receiving method according to any one of claims 2 to claim 4, wherein identification data of management data is included in management data received by the server device, the memory part stores identification data included in management data, the identification data being correlated with the matching data of the encrypted management data, and the server device also receives a decryption key when receiving the management data, reads encrypted matching data which is stored in the memory part and correlated with an identifier of the received management data, decrypts the encrypted matching data using the received decryption key, and judges whether or not the matching data which is included in the received management data is valid.

6. The data transmitting and receiving method according to claim 5, wherein the server device generates an encryption key when preparing new valid matching data, encrypts the new valid matching data with the generated encryption key, and stores in the memory part the encrypted new valid matching data, and transmits the generated encryption key when the replaced management data is transmitted.

7. The data transmitting and receiving method according to claim 5, wherein the server device correlates a value with identification data of the management data by storing information representing the value and the identification data, and the information representing the value is included in the management data.

8. The data transmitting and receiving method according to claim 1, wherein the management data transmitted from the terminal is transmitted along with identification data of a terminal which becomes a transmission recipient of the replaced management data.

9. The data transmitting and receiving method according to claim 1, wherein the management data transmitted from the terminal is management data transmitted to the terminal from a terminal different to the terminal.

10. The data transmitting and receiving method according to claim 1, wherein the management data is correlated with a dividable value and the matching data is judged to be valid, the method further comprises:
dividing the value correlated with the management data;
generating new management data;
correlating one part of the divided value with the new management data; and
correlating another part of the divided value with the replaced management data.

11. The data transmitting and receiving method according to claim 10, wherein the new management data or the replaced management data is transmitted to the terminal.

12. The data transmitting and receiving method according to claim 1, wherein management data is correlated with a value, and the server device receives a plurality of management data and if matching data of each of the plurality of management data is judged to be valid, a change is performed to reduce a value correlated with one piece of management data of the plurality of management data and another change is performed to increase a value correlated with another piece of the management data, and a total of values after the change does not exceed a total of values before the changes.

13. The data transmitting and receiving method according to claim 12, wherein the server device discards management data correlated with a value which is below a predetermined value as a result of reducing a value.

14. The data transmitting and receiving method according to any one of claim 1 to claim 13, wherein said server device receives a password along with the management data, judges whether or not the password is valid, and if the password is judged to be valid, judges whether or not the matching data is valid.

15. The data transmitting and receiving method according to any one of claim 1 to claim 13, wherein the replaced management data is correlated with a recipient ID, the server device holds the replaced management data until a terminal of the recipient who is specified by the recipient ID connects to the server.

16. A data transmitting and receiving system comprising a server device including:
a communication interface which communicates with a terminal;
a receiving part which receives management data which includes matching data for making a judgment of validity and which is transmitted from the terminal using the communication interface;
a judgment part which judges whether or not the matching data included in the received data is valid;
an invalidation part which invalidates the matching data in the case where the matching data is judged to be valid;
a matching data preparation part which prepares new valid matching data;
a replacement part which generates replaced management data acquired by replacing the invalidated matching data with the prepared new valid matching data; and
a transmission part which transmits the replaced management data to the terminal or a terminal different from the terminal using the communication interface.

17. The data transmitting and receiving system according to claim 16, wherein the server device includes a memory part which stores valid matching data, and the judgment part included in the server device includes a search part which performs a search for whether the matching data included in the received management data is stored in the memory part, and if a search performed by the search part fails, the matching data is judged not to be valid.

18. The data transmitting and receiving system according to claim 16, wherein the invalidation part included in the server device deletes invalidated matching data from the memory part.

19. The data transmitting and receiving system according to claim 17, wherein the memory part included in the server device correlates validity data which indicates whether each stored matching data is valid or not, and the judgment part reads validity data which is correlated with the matching data in the case where a search by the search part is successful, and in the case where the read validity data shows the matching data is valid, the matching data is judged to be valid.
